# EUROPÄISCHE PATENTSCHRIFT

(11) **EP 3 776 807 B1**
(45) Veröffentlichungstag und Bekanntmachung des Hinweises auf die Patenterteilung: **23.02.2022**
(21) Anmeldenummer: 19725124.2
(22) Anmeldetag: 16.05.2019
(51) Int. Cl.: H02J 50/10, H02J 50/80

(54) **LINEARES TRANSPORTSYSTEM UND SYSTEM ZUR KONTAKTLOSEN ENERGIE- UND DATENÜBERTRAGUNG**
LINEAR TRANSPORT SYSTEM AND SYSTEM FOR CONTACTLESS ENERGY AND DATA TRANSMISSION
SYSTÈME DE TRANSPORT LINÉAIRE ET SYSTÈME DE TRANSMISSION D'ÉNERGIE ET DE DONNÉES SANS CONTACT

(30) Priorität: 16.05.2018 DE 102018111715
(43) Veröffentlichungstag der Anmeldung: 17.02.2021
(73) Patentinhaber: Beckhoff Automation GmbH, 33415 Verl (DE)
(72) Erfinder: PRUESSMEIER, Uwe, 32657 Lemgo (DE); VORBOHLE, Thomas, 33397 Rietberg (DE); OTTERPOHL, Dirk, 33397 Rietberg (DE)
(74) Vertreter: Patentanwaltskanzlei WILHELM & BECK
(86) Internationale Anmeldenummer: PCT/EP2019/062659
(87) Internationale Veröffentlichungsnummer: WO 2019/219834

(56) Entgegenhaltungen:
- DE-A1- 3 150 380
- DE-A1- 3 504 753
- DE-A1- 10 147 859
- DE-A1-102014 100 636
- US-B1- 6 499 701

## Beschreibung

Die Erfindung betrifft ein System zur kontaktlosen Energie- und Datenübertragung für ein lineares Transportsystem, ein lineares Transportsystem und sowie ein Verfahren zum Betreiben eines linearen Transportsystems.

Diese Patentanmeldung beansprucht die Priorität der deutschen Patentanmeldung DE 10 2018 111 715.9, deren Offenbarungsgehalt hiermit durch Rückbezug aufgenommen wird.

Die DE 10 216 422 C5 beschreibt eine Vorrichtung zur induktiven Energieversorgung und Führung eines frei beweglichen Objekts. Die Energieübertragung findet über nur einer Leiterschleife statt.

Die DE 10 2004 031 580 B4 beschreibt eine Anordnung zur berührungslosen induktiven Energieübertragung an bewegbaren Vorrichtungen. Eine Energie- und eine Datenübertragung werden über eine gemeinsame Spule durchgeführt.

Die EP 1 984 203 B1 beschreibt ein Transportsystem mit einem Schienensystem und einem darauf angeordneten Wagen. Jeder Wagen umfasst eine Sekundärspule und ist zur Übertragung elektrischer Leistung und/oder Information darüber induktiv an das Schienensystem gekoppelt. Es werden zusätzlich Leckwellenleiter und Antennen zur redundanten Datenübertragung genutzt.

Aus der ist US 6 499 701 B1 ein System zur kontaktlosen Energie- und Datenübertragung nach Anspruch 1, ein lineares Transportsystem nach Anspruch 3 und sowie ein Verfahren zum Betreiben eines linearen Transportsystems nach Anspruch 12 bekannt.

Aus der DE 10 2014 100636 A1 ein weiteres lineares Transportsystem zur kontaktlosen Energieübertragung bekannt. Die DE 10 2013 108 767 A1 offenbart eine Referenzzeitübertragung zu Spulenmodulen in einem lineares Transportsystem. Ferner ist Stand der Technik aus der DE 35 04 753 A1, der DE 101 47 859 A1, der DE 31 50 380 A1, der DE 10 2012 201 059 A1, der DE 20 2017 105 290 U1, der DE 10 2012 103 378 A1, der DE 10 2015 102 236 A1, DE 10 2015 116 808 B3, der US 2012/ 0 217 816 A1, der DE 10 2011 004 348 A1, der DE 10 2013 110 341 A1, der US 2009/0 085 706 A1 und der US 4 836 344 A bekannt.

Die der Erfindung zugrundeliegende Aufgabe ist darin zu sehen, ein Konzept für eine effiziente kontaktlose Energie- und Datenübertragung auf einen Schlitten eines linearen Transportsystems bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem ersten Aspekt wird ein lineares Transportsystem bereitgestellt, umfassend:
einen beweglichen Schlitten,
eine Führungsschiene zum Führen des Schlittens,
einen Linearmotor zum Antreiben des Schlittens entlang der Führungsschiene, wobei der Linearmotor einen Stator und einen Läufer umfasst, wobei der Stator zumindest ein entlang der Führungsschiene stationär angeordnetes Motormodul aufweist, welches jeweils eine oder mehrere Antriebsspulen umfasst, wobei der Läufer am Schlitten angeordnet ist und einen oder mehrere Magnete umfasst, und
ein System zur kontaktlosen Energie- und Datenübertragung, wobei das System zur kontaktlosen Energie- und Datenübertragung folgendes umfasst:
   ein oder mehrere stationäre Spulenmodule, die entlang des zumindest einen Motormoduls stationär angeordnet sind,
   ein oder mehrere an dem Schlitten angeordnete Schlittenspulenmodule,
wobei das eine oder die mehreren stationären Spulenmodule jeweils eine oder mehrere Energiesendespulen und eine oder mehrere erste Datenspulen aufweisen,
wobei das eine oder die mehreren Schlittenspulenmodule eine oder mehrere mit der einen oder den mehreren Energiesendespulen induktiv koppelbare Energieempfangsspulen und eine oder mehrere mit der einen oder den mehreren ersten Datenspulen induktiv koppelbare zweite Datenspulen aufweisen,
eine Steuerungseinrichtung, die ausgebildet ist, eine Spannungsversorgung für das eine oder die mehreren stationären Spulenmodule zu steuern, um zumindest eine der einen oder der mehreren Energiesendespulen und/oder um zumindest eine der einen oder der mehreren ersten Datenspulen jeweils mit einer elektrischen Spannung zu beaufschlagen,
so dass über eine induktive Kopplung von einer mit einer elektrischen Spannung beaufschlagten Energiesendespule mit einer Energieempfangsspule Energie auf den Schlitten kontaktlos übertragen werden kann und/oder über eine induktive Kopplung von einer mit einer elektrischen Spannung beaufschlagten ersten Datenspule mit einer zweiten Datenspule Daten auf den Schlitten kontaktlos gesendet und/oder vom Schlitten empfangen werden können.

Nach einem zweiten Aspekt wird ein Verfahren zum Betreiben des linearen Transportsystems bereitgestellt, umfassend die folgenden Schritte:
Steuern der Spannungsversorgung mittels der Steuerungseinrichtung, so dass zumindest eine der einen oder der mehreren Energiesendespulen und/oder zumindest eine der einen oder der mehreren ersten Datenspulen jeweils mit einer elektrischen Spannung beaufschlagt werden, so dass über eine induktive Kopplung von einer mit einer elektrischen Spannung beaufschlagten Energiesendespule mit einer Energieempfangsspule Energie auf den Schlitten kontaktlos übertragen wird und/oder über eine induktive Kopplung von einer mit einer elektrischen Spannung beaufschlagten ersten Datenspule mit einer zweiten Datenspule Daten auf den Schlitten kontaktlos gesendet und/oder vom Schlitten empfangen werden.

Gemäß einem dritten Aspekt wird ein System zur kontaktlosen Energie- und Datenübertragung für ein lineares Transportsystem bereitgestellt, wobei das lineare Transportsystem einen beweglichen Schlitten, eine Führungsschiene zum Führen des Schlittens und einen Linearmotor zum Antreiben des Schlittens entlang der Führungsschiene umfasst, wobei der Linearmotor einen Stator und einen Läufer umfasst, wobei der Stator zumindest ein entlang der Führungsschiene stationär angeordnetes Motormodul aufweist, welches jeweils ein oder mehrere Antriebsspulen umfasst, wobei der Läufer am Schlitten angeordnet ist und einen oder mehrere Magnete umfasst, wobei das System zur kontaktlosen Energie- und Datenübertragung folgendes umfasst:
ein oder mehrere stationäre Spulenmodule, die entlang des zumindest einen Motormoduls stationär angeordnet werden können,
ein oder mehrere an dem Schlitten anordbare Schlittenspulenmodule,
wobei das eine oder die mehreren stationären Spulenmodule jeweils eine oder mehrere Energiesendespulen und eine oder mehrere erste Datenspulen aufweisen,
wobei das eine oder die mehreren Schlittenspulenmodule eine oder mehrere mit der einen oder den mehreren Energiesendespulen induktiv koppelbare Energieempfangsspulen und eine oder mehrere mit der einen oder den mehreren ersten Datenspulen induktiv koppelbare zweite Datenspulen aufweisen,
eine Steuerungseinrichtung, die ausgebildet ist, eine Spannungsversorgung für das eine oder die mehreren stationären Spulenmodule zu steuern, um zumindest eine der einen oder der mehreren Energiesendespulen und/oder um zumindest eine der einen oder der mehreren ersten Datenspulen jeweils mit einer elektrischen Spannung zu beaufschlagen,
so dass über eine induktive Kopplung von einer mit einer elektrischen Spannung beaufschlagten Energiesendespule mit einer Energieempfangsspule Energie auf den Schlitten kontaktlos übertragen werden kann und/oder über eine induktive Kopplung von einer mit einer elektrischen Spannung beaufschlagten ersten Datenspule mit einer zweiten Datenspule Daten auf den Schlitten kontaktlos gesendet und/oder vom Schlitten empfangen werden können.

Gemäß einem vierten Aspekt wird ein Computerprogramm bereitgestellt, welches Programmcode zur Durchführung des Verfahrens zum Betreiben des linearen Transportsystems umfasst, wenn das Computerprogramm auf einem Computer, zum Beispiel auf der Steuerungseinrichtung des Systems zur kontaktlosen Energie- und Datenübertragung für ein lineares Transportsystem, ausgeführt wird.

Die Erfindung basiert auf der Erkenntnis, dass die obige Aufgabe dadurch gelöst werden kann, dass für eine kontaktlose Energie- und Datenübertragung auf einen Schlitten eines linearen Transportsystems jeweils getrennte Spulenanordnungen verwendet werden. Zum einen sind Energiesendespulen und Energieempfangsspulen vorgesehen, sodass über eine entsprechende induktive Kopplung zwischen diesen Spulen Energie auf den Schlitten gesendet und/oder vom Schlitten empfangen werden kann.

Zum anderen sind erste Datenspulen und zweite Datenspulen vorgesehen, sodass über eine induktive Kopplung Daten an den Schlitten kontaktlos übertragen werden können.

Somit ist es also in vorteilhafter Weise ermöglicht, über getrennte Kanäle Energie und Daten auf den Schlitten übertragen zu können.

Ein Vorteil einer kontaktlosen Energie- und Datenübertragung ist ferner insbesondere darin zu sehen, dass dadurch eine verschleißfreie Energie- und Datenübertragung ermöglicht ist. Weiter ist es somit in vorteilhafter Weise ermöglicht, sowohl im Stillstand des Schlittens als auch während einer durch die Führungsschiene geführten Bewegung des Schlittens Daten und Energie auf den Schlitten kontaktlos übertragen zu können. Dadurch wird zum Beispiel der technische Vorteil bewirkt, Aktionen mit dem an sich passiven Schlitten auszuführen. Mögliche Applikationen sind zum Beispiel eine elektrisch betriebene Wäge-Einrichtung und/oder ein elektrisch betriebener Greifer, die beziehungsweise der auf dem Schlitten angeordnet sind.

Nach allem wird somit insbesondere der technische Vorteil bewirkt, dass ein Konzept für eine effiziente kontaktlose Energie- und Datenübertragung auf einen Schlitten eines linearen Transportsystems bereitgestellt ist.

Die Formulierung "mindestens ein(e)" umfasst insbesondere die Formulierung "ein(e) oder mehrere".

Die Formulierung "zumindest ein(e)" umfasst insbesondere die Formulierung "ein(e) oder mehrere".

Erfindungsgemäss ist vorgesehen, dass das System zur kontaktlosen Energie- und Datenübertragung eine Kommunikationsschnittstelle umfasst, die ausgebildet ist, eine Referenzzeit über ein Kommunikationsnetzwerk zu empfangen, wobei die Steuerungseinrichtung ausgebildet ist, basierend auf der Referenzzeit die Spannungsversorgung zu steuern, um ein auf der Referenzzeit basierendes Taktsignal als Daten auf den Schlitten kontaktlos zu übertragen.

Dadurch wird zum Beispiel der technische Vorteil bewirkt, dass zeitlich synchronisierte Aktionen durch den Schlitten durchgeführt werden können. Beispielsweise ist es in vorteilhafter Weise ermöglicht, Objekte aus einem schnellen Produktstrom zeitlich präzise zu greifen.

Es wird ferner insbesondere der technische Vorteil bewirkt, dass Aktionen des Schlittens synchronisiert und zeitlich präzise geplant beziehungsweise durchgeführt werden können.

In einer Ausführungsform umfasst die Kommunikationsschnittstelle eine EtherCAT-Kommunikationsschnittstelle.

Das Kommunikationsnetzwerk umfasst gemäß einer Ausführungsform ein EtherCAT-Kommunikationsnetzwerk.

In einer anderen Ausführungsform ist vorgesehen, dass der Schlitten eine Schlittenspannungsversorgung aufweist, welche mit der einen oder den mehreren Energieempfangsspulen gekoppelt ist, um die Schlittenspannungsversorgung mit der übertragenen Energie versorgen zu können, wobei der Schlitten eine Schlittensteuerungseinrichtung aufweist, die mit der Schlittenspannungsversorgung für eine Versorgung mit elektrischer Energie durch die Schlittenspannungsversorgung gekoppelt ist.

Dadurch wird zum Beispiel der technische Vorteil bewirkt, dass die Schlittensteuerungseinrichtung effizient mit elektrischer Energie versorgt werden kann. Somit kann zum Beispiel auf einen zusätzlichen Energiespeicher für die Schlittensteuerungseinrichtung verzichtet werden.

Gemäß einer weiteren Ausführungsform ist vorgesehen, dass die Schlittenspannungsversorgung mit zumindest einer der einen oder der mehreren zweiten Datenspulen gekoppelt ist, wobei die Schlittensteuerungseinrichtung ausgebildet ist, die Schlittenspannungsversorgung zu steuern, um mindestens eine der zumindest einen mit der Schlittenspannungsversorgung gekoppelten zweiten Datenspule jeweils mit einer elektrischen Spannung zu beaufschlagen, so dass über eine induktive Kopplung von einer mit einer elektrischen Spannung beaufschlagten zweiten Datenspule mit einer ersten Datenspule Daten von dem Schlitten kontaktlos übertragen werden können.

Dadurch wird zum Beispiel der technische Vorteil bewirkt, dass Daten von dem Schlitten auf die stationären Spulenmodule effizient kontaktlos übertragen werden können. Somit ist also in vorteilhafter Weise ermöglicht, dass ein Rückkanal vom Schlitten zurück zu den stationären Spulenmodulen gebildet ist.

Das heißt also insbesondere, dass gemäß dieser Ausführungsform nicht nur Daten kontaktlos auf den Schlitten übertragen werden können, sondern auch vom Schlitten zurück übertragen werden können.

Somit kann zum Beispiel ein Messwert eines Sensors, der am Schlitten angeordnet ist, vom Schlitten kontaktlos an das oder die stationären Spulenmodule übertragen werden.

Somit ist also insbesondere der Vorteil einer bidirektionalen Kommunikation ermöglicht.

Gemäß einer weiteren Ausführungsform ist vorgesehen, dass der Schlitten ein elektrisches Gerät umfasst, welches mit der Schlittenspannungsversorgung gekoppelt ist, um mit elektrischer Energie versorgt werden zu können, wobei die Schlittensteuerungseinrichtung mit der einen oder den mehreren zweiten Datenspulen gekoppelt ist, um die übertragenen Daten von den einen oder mehreren ersten Datenspulen empfangen zu können, und wobei die Schlittensteuerungseinrichtung ausgebildet ist, das elektrische Gerät basierend auf den empfangenen Daten zu steuern.

Dadurch wird zum Beispiel der technische Vorteil bewirkt, dass das elektrische Gerät effizient mit elektrischer Energie versorgt werden kann. Somit kann zum Beispiel auf einen separaten Energiespeicher für das elektrische Gerät verzichtet werden.

Weiter wird dadurch zum Beispiel der technische Vorteil bewirkt, dass das elektrische Gerät effizient betrieben beziehungsweise gesteuert werden kann.

Weiter wird dadurch zum Beispiel der technische Vorteil bewirkt, dass das elektrische Gerät über die kontaktlose Datenübertragung ferngesteuert werden kann.

Weiter wird dadurch zum Beispiel der technische Vorteil bewirkt, dass eine solche Fernsteuerung auch bei sich bewegendem Schlitten ermöglicht ist.

In einer Ausführungsform sind mehrere elektrische Geräte vorgesehen. Die mehreren elektrischen Geräte können identisch oder unterschiedlich ausgebildet sein. Ausführungen, die im Zusammenhang mit einem elektrischen Gerät gemacht sind, gelten analog für mehrere elektrische Geräte und umgekehrt.

Ein elektrisches Gerät ist zum Beispiel eines der folgenden elektrischen Geräte: Greifer, Aktor, Sensor, Wäge-Einrichtung.

Weiter ist es dadurch in vorteilhafter Weise ermöglicht, dass bei Übertragung eines entsprechenden auf der Referenzzeit basierenden Taktsignals das elektrische Gerät derart gesteuert werden kann, dass das elektrische Gerät zu einer vorgegebenen beziehungsweise vorbestimmten Zeit eine oder mehrere vorbestimmte Aktionen durchführt. Eine solche Aktion ist zum Beispiel ein Greifen eines Objekts oder mehrerer Objekte aus einem schnellen Produktstrom von Objekten zu einer vorgegebenen Zeit.

In einer anderen Ausführungsform ist vorgesehen, dass mindestens eines des einen oder der mehreren stationären Spulenmodule sich entlang des zumindest einen Motormoduls erstreckt, wobei das mindestens eine stationäre Spulenmodul genau eine Energiesendespule aufweist, die sich von einem ersten Ende zu einem dem ersten Ende gegenüberliegenden zweiten Ende des mindestens einen stationären Spulenmoduls entlang des zumindest einen Motormodul erstreckt.

Dadurch wird zum Beispiel der technische Vorteil bewirkt, dass das betreffende stationäre Spulenmodul einfach aufgebaut werden kann. Weiter wird dadurch zum Beispiel der technische Vorteil bewirkt, dass es über eine Länge vom ersten zum zweiten Ende ermöglicht ist, kontaktlos Energie auf den Schlitten zu übertragen, wenn sich dieser über das betreffende Spulenmodul erstreckt.

Gemäß einer weiteren Ausführungsform ist vorgesehen, dass mindestens eines des einen oder der mehreren stationären Spulenmodule sich entlang des zumindest einen Motormoduls erstreckt, wobei das mindestens eine stationäre Spulenmodul mehrere Energiesendespulen aufweist, die entlang des zumindest einen Motormoduls versetzt zueinander angeordnet sind.

Dadurch wird zum Beispiel der technische Vorteil bewirkt, dass eine effiziente Energieübertragung ermöglicht ist. Insbesondere wird dadurch der technische Vorteil bewirkt, dass Leistungsrippel, die bei einer Bewegung des Schlittens entlang des betreffenden stationären Spulenmoduls entstehen können, effizient minimiert werden können. Dadurch wird insbesondere eine relativ gleichmäßige Energieübertragung ohne wesentlich starke Leistungsschwankungen ermöglicht.

Nach einer anderen Ausführungsform ist vorgesehen, dass die mehreren Energiesendespulen teilweise überlappend versetzt zueinander angeordnet sind.

Dadurch wird zum Beispiel der technische Vorteil bewirkt, dass eine effiziente gleichmäßige Energieübertragung ohne starke Leistungsschwankungen ermöglicht ist.

Gemäß einer weiteren Ausführungsform ist vorgesehen, dass mehrere sich entlang des zumindest einen Motormoduls erstreckende stationäre Spulenmodule vorgesehen sind, von denen mindestens zwei unmittelbar benachbart zueinander angeordnet sind, wobei die zwei unmittelbar zueinander benachbarten stationären Spulenmodule jeweils einen Teil einer Energiesendespule aufweisen derart, dass die beiden Teile eine Energiesendespule bilden.

Dadurch wird zum Beispiel der technische Vorteil bewirkt, dass Leistungsschwankungen bei einem Übergang zwischen den zwei benachbarten stationären Spulenmodulen bei einer Energieübertragung auf einen sich über diese beiden benachbarten stationären Spulenmodule bewegenden Schlitten effizient minimiert werden können.

Diese Teile einer Energiesendespule können auch als Energiesendespulenteile bezeichnet werden.

Gemäß einer weiteren Ausführungsform ist vorgesehen, dass zumindest eines des einen oder der mehreren stationären Spulenmodule an einer Außenseite des zumindest einen Motormoduls angeordnet ist.

Dadurch wird zum Beispiel der technische Vorteil bewirkt, dass ein einfaches Nachrüsten des Systems zur kontaktlosen Daten- und Energieübertragung an ein bereits installiertes lineares Transportsystem ermöglicht ist.

Gemäß einer weiteren Ausführungsform ist vorgesehen, dass zumindest eines des einen oder der mehreren stationären Spulenmodule innerhalb eines Montageraums des zumindest einen Motormoduls angeordnet ist.

Dadurch wird zum Beispiel der technische Vorteil bewirkt, dass ein bereits vorhandener Montageraum in dem zumindest einen Motormodul effizient genutzt werden kann.

In einer anderen Ausführungsform ist vorgesehen, dass zumindest eines des einen oder der mehreren stationären Spulenmodule eine Leiterkarte aufweist, welche die eine oder die mehreren Energiesendespulen und die eine oder die mehreren ersten Datenspulen umfasst, wobei die Leiterkarte eine Außenseite von dem zumindest einen Motormodul bildet.

Dadurch wird zum Beispiel der technische Vorteil bewirkt, dass eine effiziente und Platz sparende Anordnung des entsprechenden stationären Spulenmoduls am Motormodul ermöglicht ist.

Technische Funktionalitäten des Verfahrens gemäß dem zweiten Aspekt ergeben sich analog aus entsprechenden technischen Funktionalitäten des linearen Transportsystems gemäß dem ersten Aspekt und/oder des Systems zur kontaktlosen Energie- und Datenübertragung für ein lineares Transportsystem gemäß dem dritten Aspekt.

Das heißt also insbesondere, dass sich Verfahrensmerkmale aus entsprechenden Systemmerkmalen ergeben und umgekehrt.

Bei dem linearen Transportsystem in der Formulierung "System zur kontaktlosen Energie- und Datenübertragung für ein lineares Transportsystem" handelt es sich gemäß einer Ausführungsform um das lineare Transportsystem gemäß dem ersten Aspekt.

Eine Spule im Sinne der Beschreibung umfasst zwei oder mehr als zwei Windungen oder Wicklungen. Somit ist eine Spule im Sinne der Beschreibung verschieden von einer Schleife.

Gemäß einer Ausführungsform ist vorgesehen, dass die Spulen, also beispielsweise die Spulen des stationären Spulenmoduls und/oder des Schlittenspulenmoduls, in Lagen bzw. auf mehreren Ebenen angeordnet sind.

Gemäß einer Ausführungsform ist vorgesehen, dass eine oder mehrere Spulen, also beispielsweise Spulen des stationären Spulenmoduls und/oder des Schlittenspulenmoduls, von einer Leiterkarte umfasst sind. Zum Beispiel sind eine oder mehrere Spulen auf einer Leiterkarte aufgedruckt. Zum Beispiel ist eine Spule innerhalb der Leiterkarte angeordnet. Zum Beispiel sind eine oder mehrere Spulen in Lagen oder auf mehreren Ebenen innerhalb einer Leiterkarte angeordnet.

In einer Ausführungsform umfasst das lineare Transportsystem und/oder das System zur kontaktlosen Daten- und Energieübertragung die Spannungsversorgung.

In einer Ausführungsform sind mehrere Schlitten vorgesehen. Ausführungen für einen Schlitten gelten analog für mehrere Schlitten und umgekehrt.

Die Erfindung wird im Folgenden anhand von bevorzugten Ausführungsformen näher erläutert. Hierbei zeigen:
Fig. 1 ein lineares Transportsystem und ein System zur kontaktlosen Energie- und Datenübertragung in einer Seitenansicht,
Fig. 2 eine vergrößerte Detailansicht des in Fig. 1 gezeigten linearen Transportsystems und System zur kontaktlosen Energie- und Datenübertragung in einer Seitenansicht,
Fig. 3 das in Fig. 2 gezeigte lineare Transportsystem und System zur kontaktlosen Energie- und Datenübertragung in einer Frontansicht,
Fig. 4 eine Schnittansicht durch das in Fig. 1 gezeigte lineare Transportsystem und System zur kontaktlosen Energieübertragung entlang einer in Fig. 1 gezeigten Schnittlinie A-A,
Fig. 5 eine alternative Ausführungsform des in Fig. 3 gezeigten Systems in einer Frontansicht,
Fig. 6 das in Fig. 2 gezeigte stationäre Spulenmodul mit einem unmittelbar benachbarten stationären Spulenmodul in einer Seitenansicht,
Fig. 7 zwei unmittelbar benachbart zu einander angeordnete stationäre Spulenmodule in einer weiteren Ausführungsform in einer Seitenansicht
Fig. 8 ausschnittweise zwei Spulenmodule in einer Ausführungsform in einer Seitenansicht,
Fig. 9 ausschnittweise zwei Spulenmodule in einer weiteren Ausführungsform in einer Seitenansicht,
Fig. 10 ein stationäres Spulenmodul in einer anderen Ausführungsform in einer Seitenansicht,
Fig. 11 ein stationäres Spulenmodul in einer weiteren Ausführungsform in einer Seitenansicht,
Fig. 12 mehrere nebeneinander angeordnete Energiesendespulen sowie zwei Energieempfangsspulen in einer Seitenansicht,
Fig. 13 drei unterschiedliche Positionen von zwei Energieempfangsspulen während einer Bewegung eines Schlittens entlang der in Fig. 12 gezeigten Energiesendespulen in einer Seitenansicht,
Fig. 14 zwei stationäre Spulenmodule 121 in einer weiteren Ausführungsform in einer Seitenansicht und
Fig. 15 ein Ablaufdiagramm eines Verfahrens zum Betreiben eines linearen Transportsystems.

Im Folgenden können für gleiche Merkmale gleiche Bezugszeichen verwendet werden. Weiter kann aus Gründen der Übersicht vorgesehen sein, dass nicht in jeder Figur sämtliche Elemente gezeigt sind. Weiter kann der Übersicht halber vorgesehen sein, dass nicht in jeder Zeichnung jedes Element mit einem eigenen Bezugszeichen versehen ist.

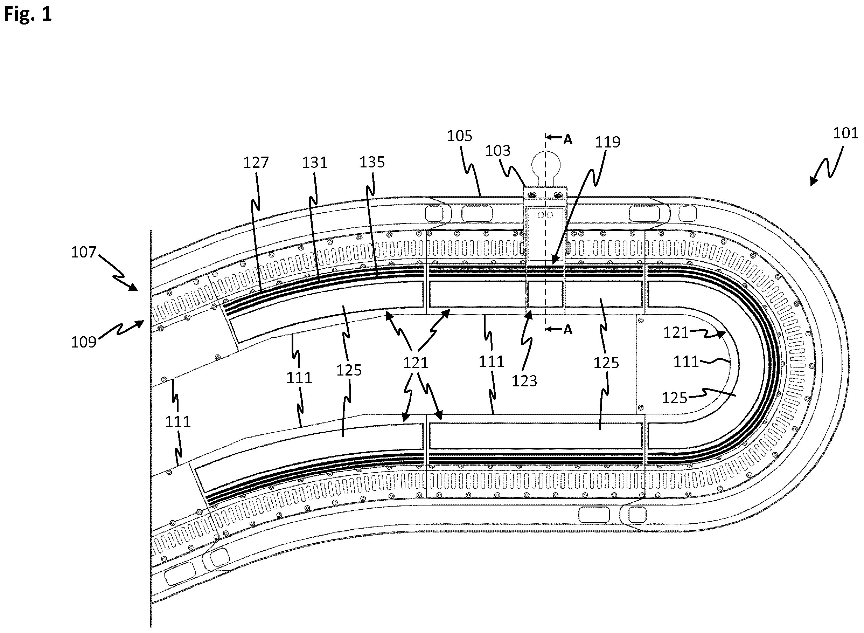

Fig. 1 zeigt ein lineares Transportsystem 101.

Das lineare Transportsystem 101 umfasst einen Schlitten 103, der durch eine Führungsschiene 105 geführt ist.

Der Schlitten 103 umfasst hier nicht dargestellte Laufrollen.

Die Laufrollen des Schlittens rollen auf Laufflächen der Führungsschiene 105 ab.

Das lineare Transportsystem 101 umfasst ferner einen Linearmotor 107. Der Linearmotor 107 umfasst einen Stator 109.

Der Stator 109 umfasst mehrere Motormodule 111, die jeweils mehrere Antriebsspulen aufweisen.

Weiter umfasst der Linearmotor 107 einen Läufer, der am Schlitten 103 angeordnet ist. Der Läufer umfasst mehrere Magnete.

Weiter umfasst das lineare Transportsystem 101 ein System zur kontaktlosen Daten- und Energieübertragung 119. Das System 119 umfasst mehrere stationäre Spulenmodule 121, die entlang der Motormodule 111 stationär angeordnet sind.

Weiter umfasst das System 119 ein Schlittenspulenmodul 123, welches am Schlitten 103 angeordnet ist.

Die stationären Spulenmodule 121 umfassen jeweils eine Energiesendespule.

Weiter umfassen die stationären Spulenmodule 121 mehrere erste Datenspulen 127, 131, 135.

Das Schlittenspulenmodul 123 umfasst eine Energieempfangsspule.

Weiter umfasst das Schlittenspulenmodul 123 mehrere zweite Datenspulen.

Weiter umfasst das lineare Transportsystem 101 eine Spannungsversorgung.

Weiter umfasst das System 119 zur kontaktlosen Daten- und Energieübertragung eine Steuerungseinrichtung.

Die Energieempfangsspule und die zweiten Datenspulen sind derart am Schlittenspulenmodul 123 angeordnet, dass die Energieempfangsspule der Energiesendespule gegenüberliegt und die zweiten Datenspulen den ersten Datenspulen jeweils gegenüberliegen.

Somit können die einzelnen Spulen aufgrund dieser gegenüberliegenden Anordnung effizient induktiv miteinander koppeln.

Das heißt also, dass die Energiesendespule mit der Energieempfangsspule induktiv koppeln kann.

Weiter können die ersten Datenspulen effizient mit entsprechenden zweiten Datenspulen induktiv koppeln. Durch die jeweilige induktive Kopplung kann somit jeweils ein Kommunikationskanal gebildet werden, über welchen in vorteilhafter Weise Daten übertragen werden können. Solche Daten umfassen zum Beispiel Steuerungsbefehle und/oder Taktsignale und/oder Sensordaten eines Sensors, der am Schlitten angeordnet ist.

Die Steuerungseinrichtung ist ausgebildet, die Spannungsversorgung zu steuern, um zumindest eine der Energiesendespulen und/oder um zumindest eine der ersten Datenspulen jeweils mit einer elektrischen Spannung zu beaufschlagen, sodass über eine induktive Kopplung von einer mit einer elektrischen Spannung beaufschlagten Energiesendespule mit der Energieempfangsspule Energie auf den Schlitten 103 kontaktlos übertragen werden kann und/oder über eine induktive Kopplung von einer mit einer elektrischen Spannung beaufschlagten ersten Datenspule mit der entsprechenden zweiten Datenspule Daten auf den Schlitten 103 kontaktlos gesendet und/oder von dem Schlitten 103 empfangen werden können.

Durch die erfindungsgemäße Anordnung der stationären Spulenmodule 121 und dem Schlittenspulenmodul 123 kann somit in vorteilhafter Weise bewirkt werden, dass sowohl während einer Bewegung des Schlittens 103 entlang der Motormodule 111 als auch bei Stillstand des Schlittens 103 Energie und/oder Daten kontaktlos auf den Schlitten 103 übertragen bzw. Daten vom Schlitten 103 empfangen werden können.

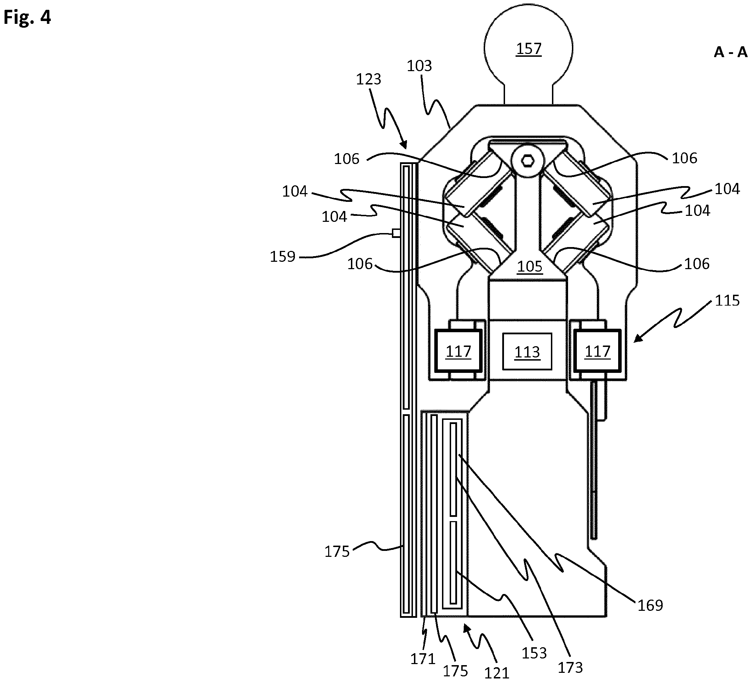

Weiter zeigt Fig. 1 eine Schnittlinie A-A, wobei Fig. 4 eine der Schnittlinie A-A entsprechende Schnittansicht zeigt.

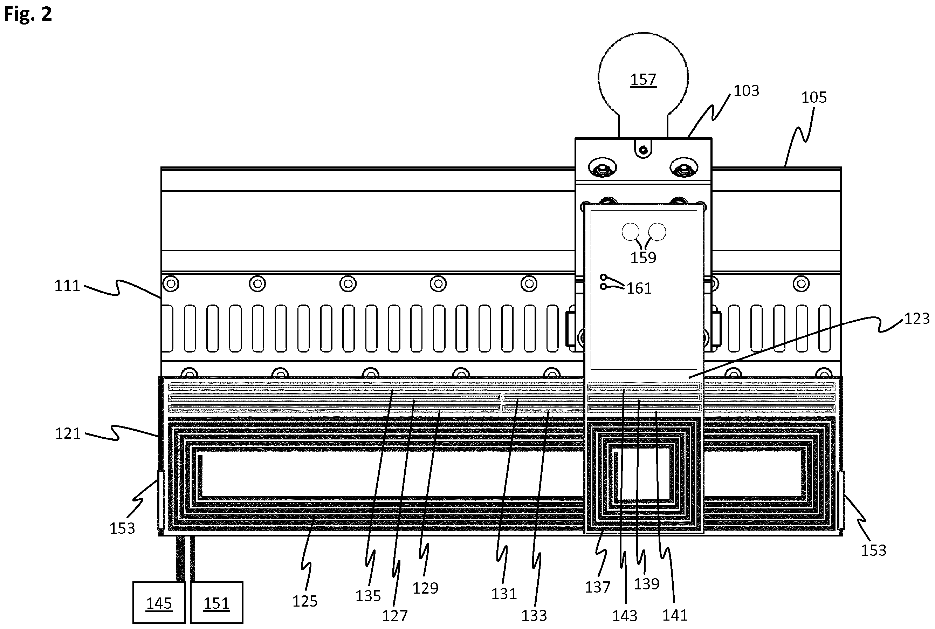

Fig. 2 zeigt eine vergrößerte Detailansicht des in Fig. 1 gezeigten Schlittens 103 auf der Führungsschiene 105.

Fig. 2 zeigt weiter eine in Zusammenhang mit Fig. 1 beschriebene Energiesendespule 125 eines stationären Spulenmoduls 121.

Fig. 2 zeigt ferner erste Datenspulen 127, 129, 131, 133, 135, wie sie im Zusammenhang mit Fig. 1 beschrieben sind.

Fig. 2 zeigt die vorstehend beschriebene Energieempfangsspule 137 des Schlittenspulenmoduls 123.

Fig. 2 zeigt weiter die mehreren zweiten Datenspulen 139, 141, 143, wie sie vorstehend bereits im Zusammenhang mit Fig. 1 beschrieben wurden.

Fig. 2 zeigt weiter die vorstehend beschriebene Spannungsversorgung 145 und die vorstehend beschriebene Steuerungseinrichtung 151.

Die ersten Datenspulen 127 und 131 können beispielsweise induktiv mit der zweiten Datenspule 139 koppeln, so dass ein erster Kommunikationskanal gebildet werden kann.

Die ersten Datenspulen 129 und 133 können beispielsweise induktiv mit der zweiten Datenspule 141 koppeln, so dass ein zweiter Kommunikationskanal gebildet werden kann.

Die erste Datenspule 135 kann beispielsweise induktiv mit der zweiten Datenspule 143 koppeln, so dass ein dritter Kommunikationskanal gebildet werden kann.

Über den dritten Kommunikationskanal kann beispielsweise eine Referenzzeit an den Schlitten 103 gesendet werden.

Über den ersten und/oder über den zweiten Kommunikationskanal können beispielsweise Daten, wie vorstehend beschrieben, an den Schlitten 103 gesendet und/oder von dem Schlitten 103 empfangen werden.

Über den ersten und den zweiten Kommunikationskanal ist somit zum Beispiel in vorteilhafter Weise eine Vollduplex-Kommunikation ermöglicht.

Der Schlitten 103 umfasst ein elektrisches Gerät 157. Das elektrische Gerät 157 ist zum Beispiel ein Greifer.

Dadurch, dass Energie kontaktlos auf den Schlitten 103 übertragen werden kann, kann das elektrische Gerät 157 betrieben werden.

Am Schlittenspulenmodul 123 sind zwei elektrische Anschlusspunkte 159 vorgesehen, an welchen der Greifer 157 elektrisch angeschlossen ist.

Weiter umfasst das Schlittenspulenmodul 123 zwei optionale Status-LEDs 161, die zum Beispiel einen Status des Schlittenspulenmoduls 123 signalisieren können.

Das Schlittenspulenmodul 123 umfasst einen ersten Bauraum für Elektronik.

In dem ersten Bauraum für Elektronik sind eine Schlittensteuerungseinrichtung und eine Schlittenspannungsversorgung angeordnet.

Die Schlittenspannungsversorgung ist mit der Energieempfangsspule 137 gekoppelt, um die Schlittenspannungsversorgung mit der übertragenen Energie versorgen zu können.

Die Schlittensteuerungseinrichtung ist mit der Schlittenspannungsversorgung für eine Versorgung mit elektrischer Energie durch die Schlittenspannungsversorgung gekoppelt.

Das in Fig. 2 gezeigte stationäre Spulenmodul 121 umfasst zwei gegenüberliegende erste elektrische Anschlüsse 153, über welche das Spulenmodul 121 mit einem weiteren Spulenmodul elektrisch verbunden werden kann. Über diese elektrischen Anschlüsse können zum Beispiel die angelegten Spannungen durchgeschleift werden.

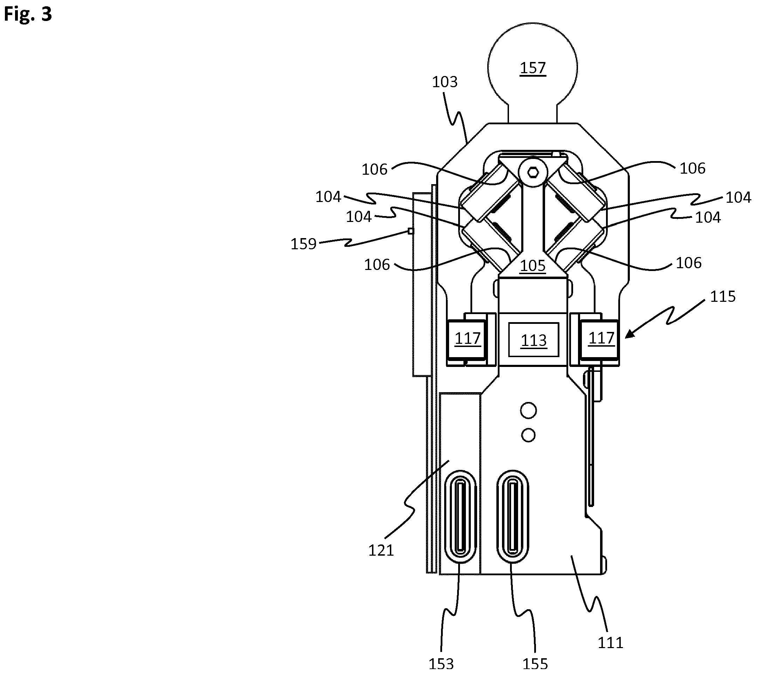

Fig. 3 zeigt das in Fig. 2 gezeigte lineare Transportsystem 121 in einer Frontansicht.

Das Motormodul 111 zeigt der Frontansicht entsprechend einen zweiten elektrischen Anschluss 155, der das Motormodul 111 mit einem benachbarten Motormodul elektrisch leitfähig verbindet, um somit zum Beispiel eine Antriebsspannung für die Antriebsspulen durchschleifen zu können.

Fig. 3 zeigt die Laufrollen 104 des Schlittens 103 sowie die Laufflächen 106 der Führungsschiene 103, auf welchen die Laufrollen 104 abrollen.

Weiter zeigt Fig. 3 symbolisch die abstrakt gezeichneten Magnete 117 des Läufers 115.

Fig. 3 zeigt weiter symbolisch eine abstrakt gezeichnete Antriebsspule 113.

Fig. 4 zeigt eine Schnittansicht durch das in Fig. 1 gezeigte lineare Transportsystem und System zur kontaktlosen Energieübertragung entlang der in Fig. 1 gezeigten Schnittlinie A-A.

Das stationäre Spulenmodul 121 umfasst einen Bauraum 169 für Elektronik.

In dem zweiten Bauraum 169 für Elektronik sind jeweils eine erste Platine 171 und eine zweite Platine 173 angeordnet.

Die erste Platine 171 umfasst die Energiesendespule 125 sowie die ersten Datenspulen 127, 129, 131, 133, 135.

Die zweite Platine 173 umfasst zum Beispiel die Steuerungseinrichtung 151.

Die erste Platine 171 und die zweite Platine 173 sind gemäß einer Ausführungsform durch ein Ferrit-Material 175 voneinander magnetisch entkoppelt. Das heißt also, dass das Ferrit-Material 175 eine magnetische Abschirmung bewirkt. Das heißt also insbesondere, dass das Ferrit-Material 175 die zweite Platine 173 von den Magnetfeldern der Spulen der ersten Platine 171 magnetisch abschirmt.

Das Ferrit-Material 175 bewirkt ferner, dass ein magnetisches Feld an den einzelnen Spulen jeweils gebündelt werden kann. Allgemein kann gemäß einer nicht gezeigten Ausführungsform anstelle des Ferrits ein magnetisch leitfähiges Material verwendet werden.

Die Frontansicht gemäß Fig. 3 zeigt eine erste Möglichkeit einer Anordnung des Spulenmoduls 121: Das Spulenmodul 121 ist gemäß der Darstellung der Fig. 3 außen auf dem stationären Motormodul 111 angeordnet.

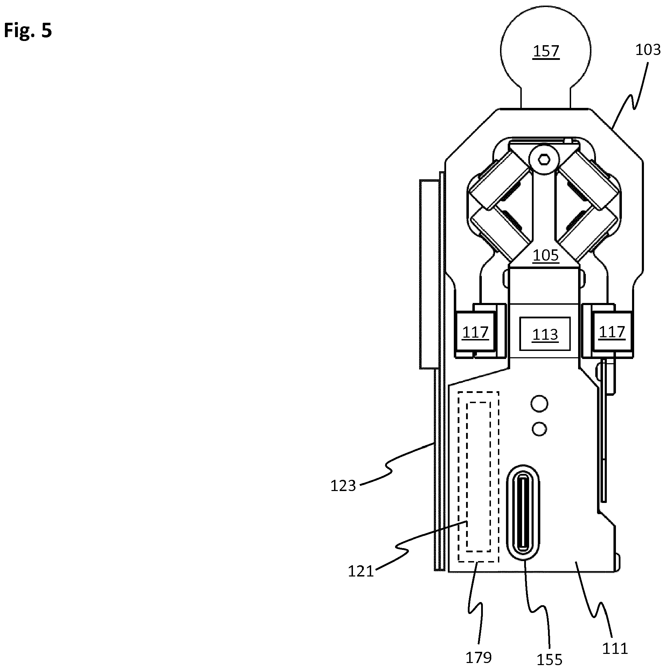

Gegenüber dieser ersten Möglichkeit zeigt die Fig. 5 eine zweite Möglichkeit einer Anordnung des Spulenmoduls 121. Fig. 5 zeigt analog zu Fig. 3 eine entsprechende Frontansicht, wobei als Unterschied zu Fig. 3 das Motormodul 111 einen Montageraum 179 aufweist, innerhalb welchem das stationäre Spulenmodul 121 angeordnet ist, wobei letzteres lediglich abstrakt durch ein Rechteck dargestellt ist.

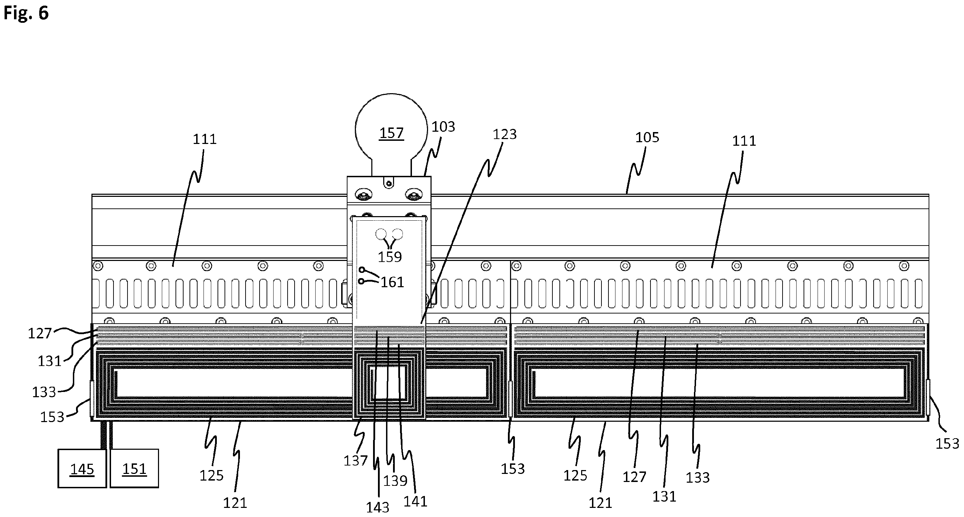

Fig. 6 zeigt das in Fig. 2 gezeigte Spulenmodul 121 mit einem unmittelbar benachbarten weiteren Spulenmodul 121.

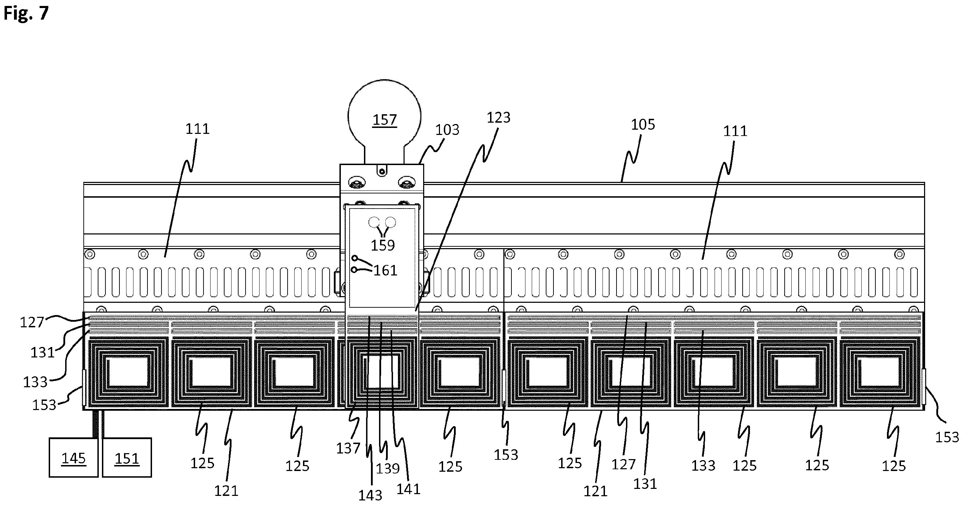

Fig. 7 zeigt zwei unmittelbar benachbart zu einander angeordnete Spulenmodule 121 in einer weiteren Ausführungsform.

Die in Fig. 7 gezeigte Ausführungsform entspricht zu einem Teil der in Fig. 6 gezeigten Ausführungsform, so dass auf die vorstehenden Ausführungen verwiesen wird.

Im Gegensatz zu der in Fig. 7 gezeigten Ausführungsform der Spulenmodule 121 umfassen die Spulenmodule 121 gemäß der in Fig. 6 gezeigten Ausführungsform jeweils mehrere Energiesendespulen 125.

Die Energiesendespulen 125 sind in der in Fig. 7 gezeigten Ausführungsform in einer Ebene nebeneinander angeordnet.

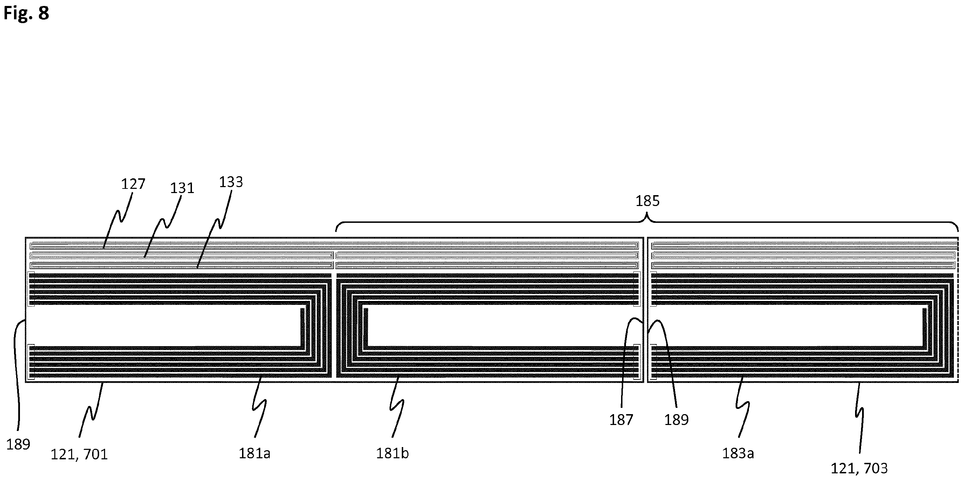

Fig. 8 zeigt ausschnittweise zwei unmittelbar benachbart zueinander angeordnete stationäre Spulenmodule 121. Das in Fig. 8 dargestellte linke Spulenmodul 121 wird zur besseren Unterscheidung noch zusätzlich mit dem Bezugszeichen 701 versehen. Das in Fig. 8 ausschnittweise dargestellte rechte Spulenmodul 121 wird zur besseren Unterscheidung noch zusätzlich mit dem Bezugszeichen 703 versehen. Das rechte und das linke Spulenmodul 701,703 sind gleich ausgebildet, weshalb im Folgenden Ausführungen für das linke Spulenmodul 701 analog für das rechte Spulenmodul gelten und umgekehrt.

Das linke stationäre Spulenmodul 701 weist zwei erste Teile 181a und 181b einer Energiesendespule auf. Beide Teile 181a und 181b sind nach außen offen ausgebildet. Außen bezeichnet hier allgemein eine Richtung weg von dem entsprechenden Spulenmodul. Somit ist das linke erste Teil 181a nach links offen ausgebildet. Somit ist das rechte erste Teil 181b nach rechts offen ausgebildet.

Analog weist das rechte stationäre Spulenmodul 703 zwei zweite Teile einer Energiesendespule auf, wobei der Übersicht halber nur eines der beiden zweiten Teile (das linke) gezeigt ist, welches mit dem Bezugszeichen 183a versehen ist. Auch die beiden zweiten Teile sind nach außen offen ausgebildet.

Das linke Spulenmodul 701 weist ein rechtes äußeres Ende 187 auf und ein linkes äußeres Ende 189 auf. Analog weist das rechte Spulenmodul 703 ein rechtes äußeres Ende (nicht gezeigt) und ein linkes äußeres Ende 189 auf. Das rechte Ende 187 des linken Spulenmoduls 701 liegt dem linken Ende 189 des rechten Spulenmoduls 703 gegenüber.

Das rechte erste Teil 181b und das linke zweite Teil 183a bilden zusammen eine Energiesendespule 185. Hierfür sind die beiden Teile 181b und 183a elektrisch leitfähig miteinander verbunden, was der Übersicht halber nicht gezeigt ist.

Analog bildet das linke erste Teil 181b und ein rechtes zweites Teil eines links neben dem linken Spulenmodul 701 angeordneten Spulenmoduls eine Energiesendespule.

Analog bildet das rechte zweite Teil des rechten Spulenmoduls 703 und ein linkes erstes Teil eines rechts neben dem rechten Spulenmodul 703 angeordneten Spulenmoduls eine Energiesendespule.

In dieser Ausführungsform ist also eine Energiesendespule über zwei Spulenmodule verteilt.

Zum Beispiel bilden die Teile einer Energiesendespule jeweils eine Hälfte der Energiesendespule.

Ein Vorteil dieser Ausführungsform ist zum Beispiel, dass im Übergang zwischen den Spulenmodulen eine übertragende Leistung nicht so stark einbricht wie bei zwei voreinander stoßenden Energiesendespulen von zwei unmittelbar benachbarten Spulenmodulen, in welchen die Energiesendespulen nicht über zwei Spulenmodule verteilt sind.

In einer nicht gezeigten Ausführungsform ist vorgesehen, dass eine Energiesendespule eine Parallelogrammform aufweist. Diese Form hat den Vorteil, dass ein Übergang zwischen zwei entsprechenden Energiesendespulen nicht auf einen Ort gebündelt ist. So lässt sich auch ein Leistungseinbruch etwas abfedern. Eine Parallelogrammform kann gemäß einer nicht gezeigten Ausführungsform verschieden von einer Rechteckform oder von einer Quadratform sein.

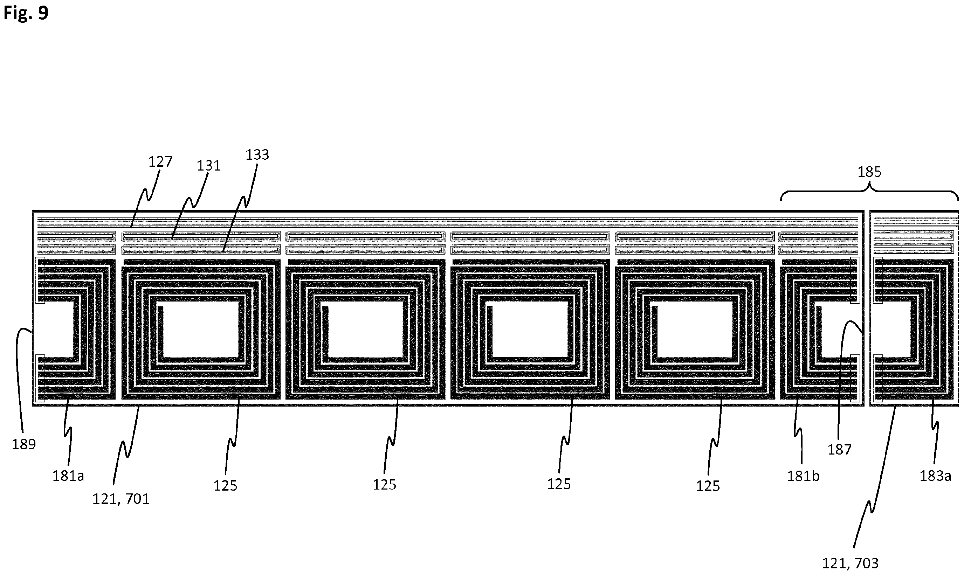

Fig. 9 zeigt ausschnittweise zwei stationäre Spulenmodule 121 in einer weiteren Ausführungsform.

Die in Fig. 9 gezeigten stationären Spulenmodule 121 sind zu einem Teil identisch zu den beiden Spulenmodulen 121 der Fig. 8 gebildet. Auf die vorstehenden Ausführungen wird verwiesen.

Als ein Unterschied weisen die beiden Spulenmodule 121 der Fig. 9 zwischen den zwei ersten Teilen 181a und 181b des linken Spulenmoduls 701 und zwischen den zwei zweiten Teilen 183a des rechten Spulenmoduls 703 mehrere Energiesendespulen 125 auf.

Ein Vorteil bei dieser Ausführungsform ist, dass sich hier maximal ein Schlitten mit voller Länge mit einer Energiesendespule überdecken kann. Durch den Schlitten wird eine Eigenfrequenz eines die Energiesendespule und die Energieempfangsspule umfassenden Energiesendeschwingkreises verstimmt. Da in dieser Ausführungsform aber mehrere Energiesendespulen je Spulenmodul vorgesehen sind, verbleiben somit Energiesendespulen, die nicht oder nur schwach von dem Schlitten beeinflusst werden.

Eine Breite einer Energiesendespule 125 der Spulenmodule 121 der Fig. 9 entspricht somit zum Beispiel maximal einer Länge eines Schlittens, so dass sich maximal ein Schlitten in seiner Länge oberhalb einer Energiesendespule befinden kann.

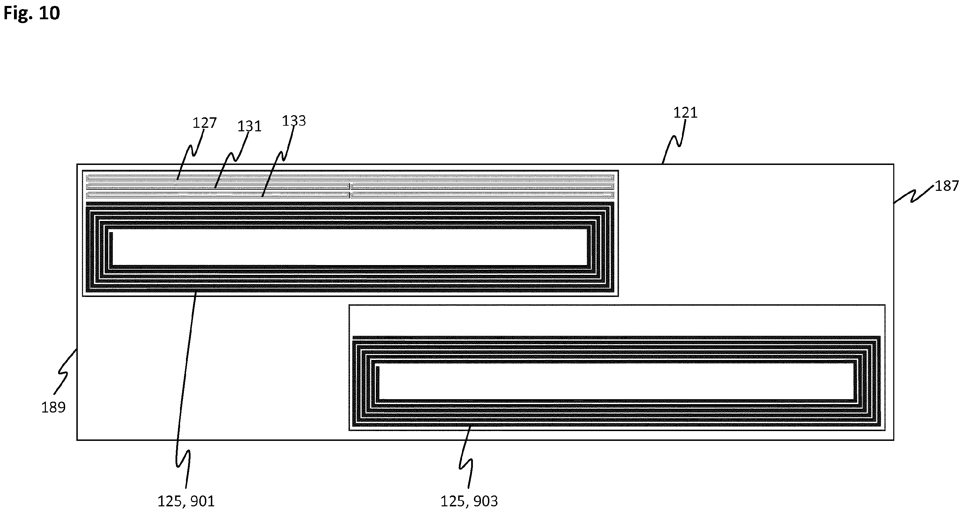

Fig. 10 zeigt ein stationäres Spulenmodul 121 in einer anderen Ausführungsform.

Das Spulenmodul 121 umfasst zwei Energiesendespulen 125, die zur besseren Unterscheidung noch mit den Bezugszeichen 901 und 903 versehen sind. Die beiden Energiesendespulen 901 und 903 sind teilweise überlappend versetzt zueinander angeordnet. Die Energiesendespule 901 ist oberhalb der Energiesendespule 903 angeordnet. Die beiden Energiesendespulen 901 und 903 erstrecken sich nicht über eine Länge des Spulenmoduls 121, also von dem linken Ende 189 bis zum rechten Ende 187. Eine jeweilige Länge der Energiesendespulen 901 und 903 beträgt zum Beispiel maximal 75% der Länge des Spulenmoduls 121.

Dadurch wird zum Beispiel der technische Vorteil bewirkt, dass eine effiziente Energieübertragung ermöglicht ist. Insbesondere wird dadurch der technische Vorteil bewirkt, dass Leistungsrippel, die bei einer Bewegung des Schlittens 103 entlang des Spulenmoduls 121 entstehen können, effizient minimiert werden können. Dadurch wird insbesondere eine relativ gleichmäßige Energieübertragung ohne wesentlich starke Leistungsschwankungen ermöglicht.

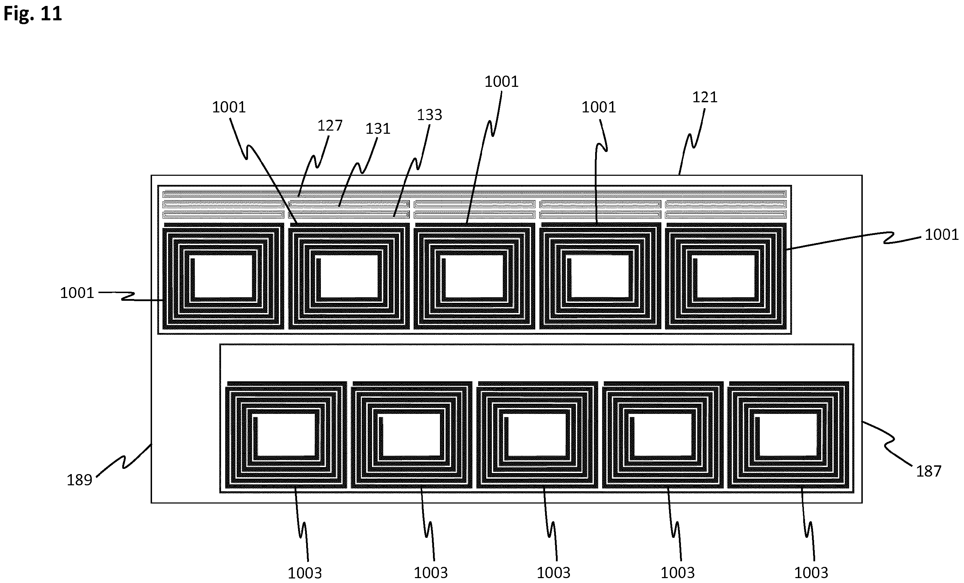

Fig. 11 zeigt ein stationäres Spulenmodul 121 in einer Ausführungsform.

Das in Fig. 11 gezeigte Spulenmodul 121 ist zu einem Teil identisch zu dem in Fig. 10 gezeigten Spulenmodul 121 ausgebildet. Auf die vorstehenden Ausführungen wird verwiesen.

Als ein Unterschied sind anstelle der einen oberen Energiesendespule 901 mehrere Energiesendespulen 1001 und anstelle der einen unteren Energiesendespule 903 mehrere Energiesendespulen 1003 vorgesehen, die analog zu den Energiesendespulen 901 und 903 der Fig. 10 versetzt und teilweise überlappend angeordnet sind.

Eine Breite einer Energiesendespule 1001 bzw. 1003 des Spulenmoduls 121 der Fig. 11 entspricht somit zum Beispiel maximal einer Länge eines Schlittens, so dass sich maximal ein Schlitten in seiner Länge oberhalb einer Energiesendespule befinden kann.

Ein Vorteil bei dieser Ausführungsform ist, dass hier maximal ein Schlitten mit voller Länge auf einer Energiesendespule stehen kann. Durch den Schlitten wird eine Eigenfrequenz eines die Energiesendespule und die Energieempfangsspule umfassenden Energiesendeschwingkreises verstimmt. Da aber mehrere Energiesendespulen je Spulenmodul vorgesehen, verbleiben somit Energiesendespulen, die nicht oder nur schwach von dem Schlitten beeinflusst werden.

Ein Vorteil einer Ausführungsform, in welcher sich eine Energiesendespule nicht über zwei stationäre Spulenmodule erstreckt, ist zum Beispiel, dass hier auf eine elektrische Kontaktierung zwischen den Spulenmodulen zwecks elektrischer Kontaktierung der beiden Teile der Energiesendespule verzichtet werden kann, was dann aber aufgrund einer Lücke zwischen zwei unmittelbar benachbarten Energiesendespulen von zwei Spulenmodulen wieder zu einem Leistungseinbruch führen kann.

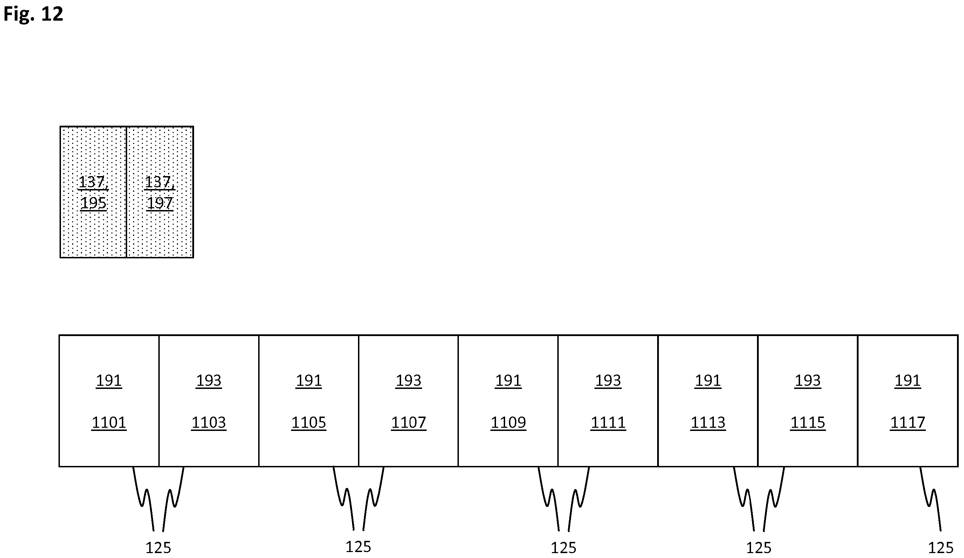

Fig. 12 zeigt mehrere nebeneinander angeordnete Energiesendespulen 125, die wie folgt bezeichnet werden: Eine erste Energiesendespule 1101, eine zweite Energiesendespule 1103, eine dritte Energiesendespule 1105, eine vierte Energiesendespule 1107, eine fünfte Energiesendespule 1109, eine sechste Energiesendespule 1111, eine siebte Energiesendespule 1113, eine achte Energiesendespule 1115 und eine neunte Energiesendespule 1117.

Die Energiesendespulen 125 weisen beispielsweise jeweils eine Breite auf, die zwei Drittel einer Summe von Breiten aller Energieempfangsspulen des Schlittens 103 beträgt.

Die Spulen 125 werden gegenläufig bestromt, also gegensinnig oder 180° phasenverschoben. Zur besseren Unterscheidung sind diejenigen Spulen 125, die entsprechend einer ersten Phase bestromt werden, zusätzlich mit dem Bezugszeichen 191 gekennzeichnet, und sind diejenigen Spulen 125, die entsprechend einer zu der ersten Phase 180° phasenverschobenen zweiten Phase bestromt werden, zusätzlich mit dem Bezugszeichen 193 gekennzeichnet.

Die erste, dritte, fünfte, siebte und neunte Energiesendespule werden also entsprechend der ersten Richtung bestromt. Die zweite, vierte, sechste und achte Energiesendespule werden entsprechend relativ zur ersten Richtung 180° phasenverschoben bestromt.

In einer nicht gezeigten Ausführungsform sind mehr oder weniger Energiesendespulen als die in Fig. 12 gezeigte Anzahl an Energiesendespulen vorgesehen. Die zu Fig. 12 gemachten Ausführungen gelten dann analog.

Fig. 12 zeigt weiter zwei Energieempfangsspulen 137, welche wie folgt bezeichnet werden: Eine erste Energieempfangsspule 195 und eine zweite Energieempfangsspule 197. Die beiden Energieempfangsspulen 195 und 197 sind an einem nicht gezeigten Schlitten, beispielsweise an dem Schlitten 103 des in Fig. 1 gezeigten linearen Transportsystems 101, angeordnet.

Die beiden Energieempfangsspulen 195, 197 weisen gemäß einer Ausführungsform jeweils eine Breite auf, die einer halben Breite des Schlittens 103 entspricht. Das heißt, dass gemäß dieser Ausführungsform die Summe der Breiten der beiden Energieempfangsspulen 195, 197 der Breite des Schlittens 103 entspricht.

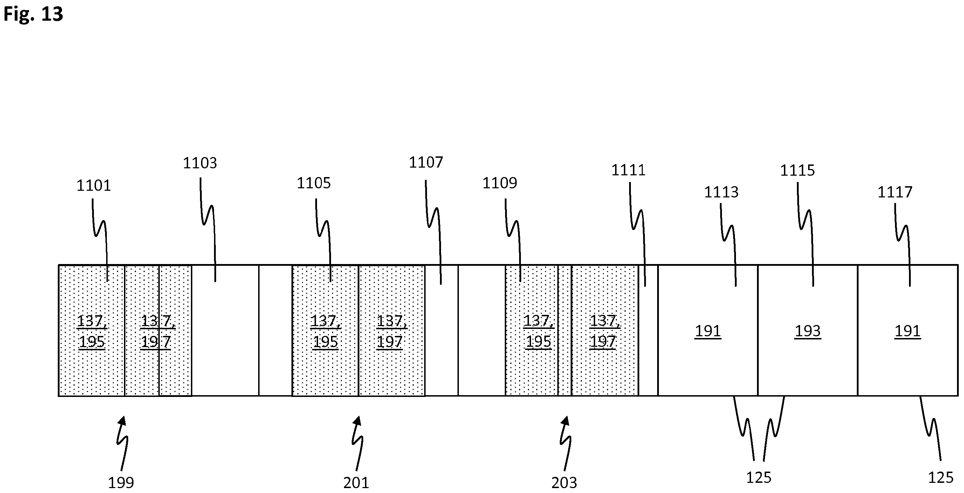

Fig. 13 zeigt drei unterschiedliche Positionen der beiden Energieempfangsspulen 195, 197 während einer Bewegung des Schlittens entlang der Energiesendespulen 125.

In einer ersten Position 199 befindet sich die erste Energieempfangsspule 195 vollständig über der ersten Energiesendespule und ist daher zu 100% an die erste Energiesendespule 1101 gekoppelt. Mit dieser und den nachfolgenden Prozentangaben ist jeweils eine prozentuale Überdeckung der entsprechenden Energieempfangsspule mit der entsprechenden Energiesendespule unter der Berücksichtigung der gegensinnigen Bestromung gemeint. Die zweite Energieempfangsspule 197 befindet sich in der ersten Position 199 hälftig über der ersten Energiesendespule 195 und hälftig über der zweiten Energiesendespule 1103. Da die erste und die zweite Energiesendespule 1101, 1103 gegenläufig bestromt werden, heben sich die jeweiligen induktiven Kopplungen auf, so dass die zweite Energieempfangsspule in der ersten Position 199 zu 0% an der ersten und zu 0 % an der zweiten Energiesendespule 1101, 1103 gekoppelt ist.

In einer zweiten Position 201 befindet sich die erste Energieempfangsspule 195 vollständig über der dritten Energiesendespule 1105 und ist daher zu 100% an die dritte Energiesendespule 1105 gekoppelt. Die zweite Energieempfangsspule 197 befindet sich vollständig über der vierten Energiesendespule 1107 und ist daher zu 100% an die vierte Energiesendespule 1105 gekoppelt.

In einer dritten Position 203 befindet sich die erste Energieempfangsspule 195 teilweise oberhalb der fünften Energiesendespule 1109 und teilweise oberhalb der sechsten Energiesendespule 1111. Da die fünfte Energiesendespule 1109 und die sechste Energiesendespule 1111 gegenläufig bestromt werden, heben sich jeweiligen induktiven Kopplungen teilweise gegenseitig auf, so dass in der Summe die erste Energieempfangsspule 195 zu 60% an die fünfte Energiesendespule 1109 gekoppelt ist.

In der dritten Position 203 befindet sich die zweite Energieempfangsspule 197 vollständig oberhalb der sechsten Energiesendespule 1111 und ist daher zu 100% an die sechste Energiesendespule 1111 gekoppelt.

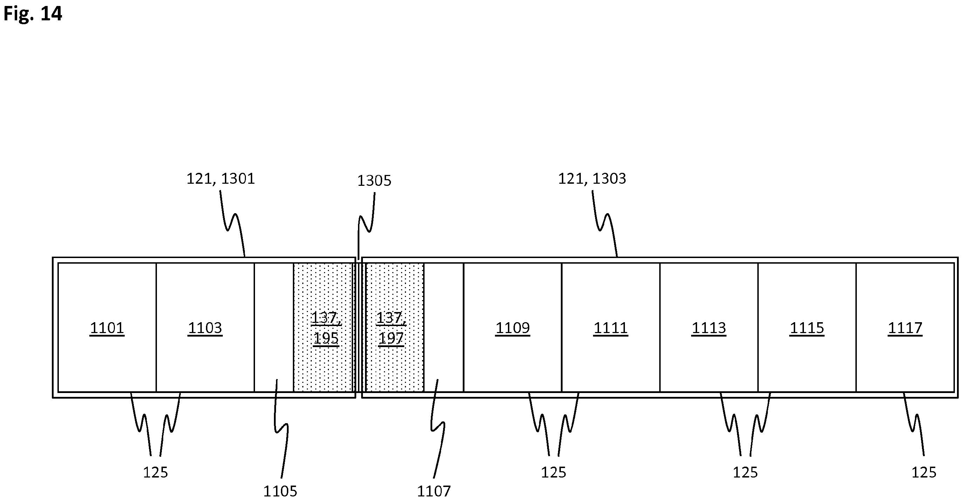

Fig. 14 zeigt zwei stationäre Spulenmodule 121 in einer weiteren Ausführungsform.

Das in der Fig. 14 dargestellte linke Spulenmodul 121 ist zusätzlich mit dem Bezugszeichen 1301 und das in Fig. 14 dargestellte rechte Spulenmodul 121 ist zusätzlich mit dem Bezugszeichen 1303 versehen.

Das linke Spulenmodul 1301 umfasst die erste, die zweite und die dritte Energiesendespule 1101, 1103, 1105 der Fig. 12.

Das rechte Spulenmodul 1303 umfasst die vierte, die fünfte, die sechste, die siebte, die achte und die neunte Energiesendespule 1107, 1109, 1111, 1113, 1115 und 1117 der Fig. 12.

In einer nicht gezeigten Ausführungsform umfassen beide Spulenmodule 1301 und 1303 eine gleiche Anzahl von Energiesendespulen.

Wie bereits im Zusammenhang mit den Fig. 12 und 13 beschrieben, werden die einzelnen Energiesendespulen gegenläufig bestromt.

Fig. 14 zeigt ferner die beiden Energieempfangsspulen 195, 197.

Die zweite Energieempfangsspule 197 befindet sich vollständig oberhalb der vierten Energiesendespule 1107 des rechten Spulenmoduls und ist daher zu 100% an die vierte Energiesendespule 1107 induktiv gekoppelt.

Die erste Energieempfangsspule 195 befindet sich teilweise oberhalb der dritten Energiesendespule 1105 und teilweise oberhalb einer Lücke 1305 zwischen dem linken Spulenmodul 1301 und dem rechten Spulenmodul 1303. Insofern ist eine induktive Kopplung der ersten Energieempfangsspule 195 an die dritte Energiesendespule 1105 geringer verglichen mit einer Position, in welcher sich die erste Energieempfangsspule 195 vollständig oberhalb der dritten Energiesendespule 1105 befindet.

Die in Fig. 14 gezeigte Ausführungsform ermöglicht es somit in vorteilhafter Weise, dass auch während eines Übergangs eines Schlittens zwischen zwei dem linken und dem rechten stationären Spulenmodul 1301, 1303 der Schlitten effizient lückenlos mit Energie versorgt werden kann.

Das Vorsehen von zwei nebeneinander angeordneten Energieempfangsspulen auf dem Schlitten weist zum Beispiel den Vorteil auf, dass dadurch beim Übertritt des Schlittens vom einem auf das nächste Spulenmodul gewährleistet ist, dass immer eine der beiden Energieempfangsspulen vollflächig über einem der Spulenmodule steht und somit ein Minimum an Übertragungsleistung immer gewährleistet ist.

Dadurch ergibt sich weiterhin der Vorteil, dass die Erregung der Energiesendespulen nicht zueinander synchron verlaufen muss. Dadurch wird keine direkte Verbindung zwischen den Spulenmodulen benötigt, wie es beispielsweise bei einer Ausführungsform notwendig ist, gemäß welcher sich eine Energiesendespule über zwei Spulenmodule erstreckt (zwei Teile einer Energiesendespule, die eine gemeinsame Energiesendespule bilden) .

Somit kann das Problem des aufgrund der Lücke auftretenden Leistungsrippels im Spulen- und im Modulübergang effizient gelöst werden.

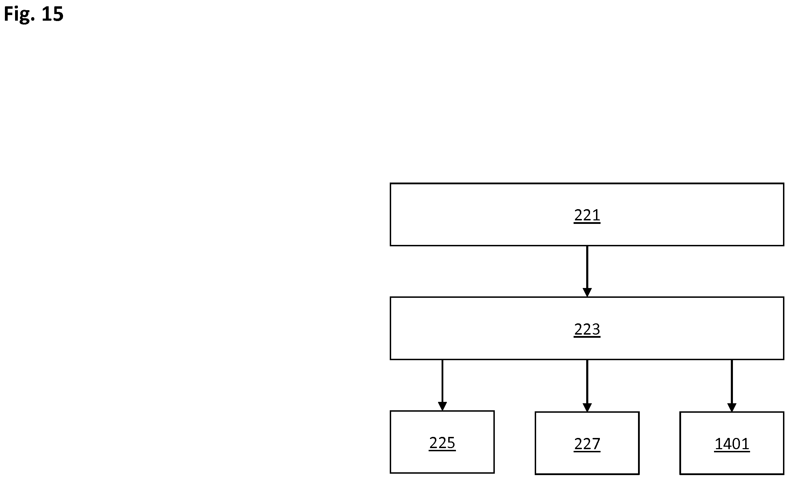

Fig. 15 zeigt ein Ablaufdiagramm eines Verfahrens zum Betreiben eines linearen Transportsystems, umfassend die folgenden Schritte:
Steuern 221 der Spannungsversorgung mittels der Steuerungseinrichtung, so dass zumindest eine der einen oder der mehreren Energiesendespulen und/oder zumindest eine der einen oder der mehreren ersten Datenspulen jeweils mit einer elektrischen Spannung beaufschlagt 223 werden, so dass über eine induktive Kopplung von einer mit einer elektrischen Spannung beaufschlagten Energiesendespule mit einer Energieempfangsspule Energie auf den Schlitten kontaktlos übertragen 225 wird und/oder über eine induktive Kopplung von einer mit einer elektrischen Spannung beaufschlagten ersten Datenspule mit einer zweiten Datenspule Daten auf den Schlitten kontaktlos gesendet 227 und/oder vom Schlitten empfangen 1401 werden.

Das erfindungsgemäße Konzept ermöglicht zusammenfassend eine gleichmäßige Energieübertragung ohne starke Leistungsschwankungen. Um Schwebungen in verschiedenen Schwingkreisen (, gebildet durch die Spulen,) zu vermeiden, werden die Energiesendespulen und/oder die ersten Spulen und/oder die zweiten Spulen beispielsweise aktiv mit einer Frequenz angeregt, die der Resonanzfrequenz entspricht. Eine bidirektionale, synchrone Kommunikation erfolgt beispielsweise mittels magnetischen oder elektromagnetischen Pulsen (Signalen, Wellen). Die synchrone Datenübertragung ermöglicht in vorteilhafter Weise, dass im Empfänger (Schlitten) eine "verteilte Uhr" (Phasenregelschleife) mitlaufen kann. Das ermöglicht zum Beispiel, exakt synchronisierte Bewegungsabläufe durch einen Greifer auf dem Schlitten ausführen zu können. Damit ist insbesondere ermöglicht, einen Bewegungsbefehl für eine bestimmte Bewegung des Greifers zeitlich unabhängig von einem Kommunikationszyklus an den Schlitten zu übertragen.

In einer nicht gezeigten Ausführungsform umfasst das Schlittenspulenmodul einen oder mehrere Energiespeicher zum Speichern von übertragener Energie. Ein Energiespeicher ist zum Beispiel ein Elektrolytkondensator.

## Patentansprüche

1. Lineares Transportsystem (101), umfassend:
einen beweglichen Schlitten (103),
eine Führungsschiene (105) zum Führen des Schlittens (103),
einen Linearmotor (107) zum Antreiben des Schlittens (103) entlang der Führungsschiene (105), wobei der Linearmotor (107) einen Stator (109) und einen Läufer (115) umfasst, wobei der Stator (109) zumindest ein entlang der Führungsschiene (105) stationär angeordnetes Motormodul (111) aufweist, welches jeweils ein oder mehrere Antriebsspulen (113) umfasst, wobei der Läufer (115) am Schlitten (103) angeordnet ist und einen oder mehrere Magnete (117) umfasst, und
ein System (119) zur kontaktlosen Energie- und Datenübertragung für ein lineares Transportsystem (101), wobei das System (119) zur kontaktlosen Energie- und Datenübertragung folgendes umfasst:
ein oder mehrere stationäre Spulenmodule (121), die entlang des zumindest einen Motormoduls (111) stationär angeordnet werden können,
ein oder mehrere an dem Schlitten (103) anordbare Schlittenspulenmodule (123),
wobei das eine oder die mehreren stationären Spulenmodule (121) jeweils eine oder mehrere Energiesendespulen (125) und eine oder mehrere erste Datenspulen (127, 129, 131, 133, 135) aufweisen,
wobei das eine oder die mehreren Schlittenspulenmodule (123) eine oder mehrere mit der einen oder den mehreren Energiesendespulen (125) induktiv koppelbare Energieempfangsspulen (137) und eine oder mehrere mit der einen oder den mehreren ersten Datenspulen (127, 129, 131, 133, 135) induktiv koppelbare zweite Datenspulen (139, 141, 143) aufweisen,
eine Steuerungseinrichtung (151), die ausgebildet ist, eine Spannungsversorgung (145) für das eine oder die mehreren stationären Spulenmodule (121) zu steuern, um zumindest eine der einen oder der mehreren Energiesendespulen (125) und/oder um zumindest eine der einen oder der mehreren ersten Datenspulen (127, 129, 131, 133, 135) jeweils mit einer elektrischen Spannung zu beaufschlagen,
so dass über eine induktive Kopplung von einer mit einer elektrischen Spannung beaufschlagten Energiesendespule (125) mit einer Energieempfangsspule (137) Energie auf den Schlitten (103) kontaktlos übertragen werden kann und/oder über eine induktive Kopplung von einer mit einer elektrischen Spannung beaufschlagten ersten Datenspule (127, 129, 131, 133, 135) mit einer zweiten Datenspule (139, 141, 143) Daten auf den Schlitten (103) kontaktlos gesendet und/oder vom Schlitten (103) empfangen werden können,
**dadurch gekennzeichnet, dass**
eine Kommunikationsschnittstelle vorgesehen ist, die ausgebildet ist, eine Referenzzeit über ein Kommunikationsnetzwerk zu empfangen, wobei die Steuerungseinrichtung (151) ausgebildet ist, basierend auf der Referenzzeit die Spannungsversorgung (145) zu steuern, um ein auf der Referenzzeit basierendes Taktsignal als Daten auf den Schlitten (103) kontaktlos zu übertragen.

2. Lineares Transportsystem (101), wobei die eine oder die mehreren ersten Datenspulen (127, 129, 131, 133, 135) und die eine oder die mehreren zweiten Datenspulen (139, 141, 143) einen ersten, zweiten und dritten Kommunikationskanal bilden, um über den ersten Kommunikationskanal Daten an den Schlitten (103) zu senden, um über den zweiten Kommunikationskanal Daten von dem Schlitten (103) zu empfangen und um über den dritten Kommunikationskanal das auf der Referenzzeit basierendes Taktsignal zum Schlitten (103) zu übertragen.

3. Lineares Transportsystem (101) nach Anspruch 1 oder 2, wobei der Schlitten (103) eine Schlittenspannungsversorgung (215) aufweist, welche mit der einen oder den mehreren Energieempfangsspulen (137) gekoppelt ist, um die Schlittenspannungsversorgung (215) mit der übertragenen Energie versorgen zu können, wobei der Schlitten (103) eine Schlittensteuerungseinrichtung (217) aufweist, die mit der Schlittenspannungsversorgung (215) für eine Versorgung mit elektrischer Energie durch die Schlittenspannungsversorgung (215) gekoppelt ist.

4. Lineares Transportsystem (101) nach Anspruch 3, wobei die Schlittenspannungsversorgung (215) mit zumindest einer der einen oder den mehreren zweiten Datenspulen (139, 141, 143) gekoppelt ist, wobei die Schlittensteuerungseinrichtung (217) ausgebildet ist, die Schlittenspannungsversorgung (215) zu steuern, um mindestens eine der zumindest einen mit der Schlittenspannungsversorgung (215) gekoppelten zweiten Datenspule (139, 141, 143) jeweils mit einer elektrischen Spannung zu beaufschlagen, so dass über eine induktive Kopplung von einer mit einer elektrischen Spannung beaufschlagten zweiten Datenspule (139, 141, 143) mit einer ersten Datenspule (127, 129, 131, 133, 135) Daten von dem Schlitten (103) kontaktlos übertragen werden können.

5. Lineares Transportsystem (101) nach Anspruch 3 oder 4, wobei der Schlitten (103) ein elektrisches Gerät (157) umfasst, welches mit der Schlittenspannungsversorgung (215) gekoppelt ist, um das elektrische Gerät (157) mit elektrischer Energie versorgen zu können, wobei die Schlittensteuerungseinrichtung (217) mit der einen oder den mehreren zweiten Datenspulen (139, 141, 143) gekoppelt ist, um die übertragenen Daten empfangen zu können, und wobei die Schlittensteuerungseinrichtung (217) ausgebildet ist, das elektrische Gerät (157) basierend auf den empfangenen Daten zu steuern.

6. Lineares Transportsystem (101) nach einem der vorherigen Ansprüche, wobei mindestens eines des einen oder der mehreren stationären Spulenmodule (121) sich entlang des zumindest einen Motormoduls (111) erstreckt, wobei das mindestens eine stationäre Spulenmodul (121) genau eine Energiesendespule (125) aufweist, die sich von einem ersten Ende zu einem dem ersten Ende gegenüberliegenden zweiten Ende des mindestens einen Spulenmoduls (121) entlang des zumindest einen Motormoduls (111) erstreckt.

7. Lineares Transportsystem (101) nach einem der vorherigen Ansprüche, wobei mindestens eines des einen oder der mehreren stationären Spulenmodule (121) sich entlang des zumindest einen Motormoduls (111) erstreckt, wobei das mindestens eine stationäre Spulenmodul (121) mehrere Energiesendespulen (125) aufweist, die entlang des zumindest einen Motormoduls (111) versetzt zueinander angeordnet sind.

8. Lineares Transportsystem (101) nach Anspruch 7, wobei die mehreren Energiesendespulen (125) teilweise überlappend versetzt zueinander angeordnet sind.

9. Lineares Transportsystem (101) nach einem der vorherigen Ansprüche, wobei mehrere sich entlang des zumindest einen Motormoduls (111) erstreckende stationäre Spulenmodule (121) vorgesehen sind, von denen mindestens zwei unmittelbar benachbart zueinander angeordnet sind, wobei die zwei unmittelbar benachbarten stationären Spulenmodule (121) jeweils einen Teil einer Energiesendespule (125) aufweisen derart, dass die beiden Teile eine Energiesendespule (125) bilden.

10. Lineares Transportsystem (101) nach einem der einem der vorherigen Ansprüche, wobei zumindest eines des einen oder der mehreren stationären Spulenmodule (121) eine Leiterkarte aufweist, welche die eine oder die mehreren Energiesendespulen (125) und die eine oder die mehreren ersten Datenspulen (127, 129, 131, 133, 135) umfasst, wobei die Leiterkarte eine Außenseite des zumindest einen Motormoduls (111) bildet.

11. Verfahren zum Betreiben eines linearen Transportsystems mit ein oder mehrere stationäre Spulenmodule (121), die entlang einem Motormoduls (111) stationär angeordnet sind, ein oder mehrere an einem Schlitten (103) angeordnete Schlittenspulenmodule (123),
wobei das eine oder die mehreren stationären Spulenmodule (121) jeweils eine oder mehrere Energiesendespulen (125) und eine oder mehrere erste Datenspulen (127, 129, 131, 133, 135) aufweisen,
wobei das eine oder die mehreren Schlittenspulenmodule (123) eine oder mehrere mit der einen oder den mehreren Energiesendespulen (125) induktiv koppelbare Energieempfangsspulen (137) und eine oder mehrere mit der einen oder den mehreren ersten Datenspulen (127, 129, 131, 133, 135) induktiv koppelbare zweite Datenspulen (139, 141, 143) aufweisen,
umfassend die folgenden Schritte:
Steuern (221) einer Spannungsversorgung (145) für das eine oder die mehreren stationären Spulenmodule (121) mittels einer Steuerungseinrichtung (151), so dass zumindest eine der einen oder der mehreren Energiesendespulen (125) und/oder zumindest eine der einen oder der mehreren ersten Datenspulen (127, 129, 131, 133, 135) jeweils mit einer elektrischen Spannung beaufschlagt (223) werden, so dass über eine induktive Kopplung von einer mit einer elektrischen Spannung beaufschlagten Energiesendespule (125) mit einer Energieempfangsspule (137) Energie auf den Schlitten (103) kontaktlos übertragen (225) wird und/oder über eine induktive Kopplung von einer mit einer elektrischen Spannung beaufschlagten ersten Datenspule (127, 129, 131, 133, 135) mit einer zweiten Datenspule (139, 141, 143) Daten auf den Schlitten (103) kontaktlos gesendet (227) und/oder vom Schlitten (103) empfangen (1401) werden,
**dadurch gekennzeichnet, dass**
die Steuerungseinrichtung (151) basierend auf einer Referenzzeit die Spannungsversorgung (145) steuert, um ein auf der Referenzzeit basierendes Taktsignal als Daten auf den Schlitten (103) kontaktlos zu übertragen.

12. Verfahren nach Anspruch 11, wobei die eine oder die mehreren ersten Datenspulen (127, 129, 131, 133, 135) und die eine oder die mehreren zweiten Datenspulen (139, 141, 143) einen ersten, zweiten und dritten Kommunikationskanal bilden, wobei über den ersten Kommunikationskanal Daten an den Schlitten (103) gesendet werden, wobei über den zweiten Kommunikationskanal Daten von dem Schlitten (103) empfangen werden und wobei über den dritten Kommunikationskanal das das auf der Referenzzeit basierendes Taktsignal zum Schlitten (103) übertragen wird.

## Claims

1. Linear transport system (101), comprising:
a movable carriage (103),
a guide rail (105) for guiding the carriage (103),
a linear motor (107) for driving the carriage (103) along the guide rail (105), wherein the linear motor (107) comprises a stator (109) and a rotor (115), wherein the stator (109) has at least one motor module (111) which is arranged in a stationary manner along the guide rail (105) and in each case comprises one or more drive coils (113), wherein the rotor (115) is arranged on the carriage (103) and comprises one or more magnets (117), and
a system (119) for contactless power and data transmission for a linear transport system (101), wherein the system (119) for contactless power and data transmission comprises the following:
one or more stationary coil modules (121) which can be arranged in a stationary manner along the at least one motor module (111),
one or more carriage coil modules (123) which can be arranged on the carriage (103),
wherein the one or more stationary coil modules (121) each have one or more power transmitter coils (125) and one or more first data coils (127, 129, 131, 133, 135),
wherein the one or more carriage coil modules (123) have one or more power receiver coils (137) which can be inductively coupled to the one or more power transmitter coils (125) and one or more second data coils (139, 141, 143) which can be inductively coupled to the one or more first data coils (127, 129, 131, 133, 135),
a control device (151) which is designed to control a voltage supply (145) for the one or more stationary coil modules (121) in order to in each case apply an electrical voltage to at least one of the one or more power transmitter coils (125) and/or at least one of the one or more first data coils (127, 129, 131, 133, 135),
so that power can be contactlessly transmitted to the carriage (103) by means of inductive coupling of a power transmitter coil (125), to which electrical voltage is applied, to a power receiver coil (137) and/or data can be contactlessly transmitted to the carriage (103) and/or received from the carriage (103) by means of inductive coupling of a first data coil (127, 129, 131, 133, 135), to which an electrical voltage is applied, to a second data coil (139, 141, 143),
**characterized in that**
a communication interface is provided, which is designed to receive a reference time via a communication network, wherein the control device (151) is designed to control the voltage supply (145) based on the reference time in order to contactlessly transmit a clock signal based on the reference time to the carriage (103) as data.

2. Linear transport system (101), wherein the one or more first data coils (127, 129, 131, 133, 135) and the one or more second data coils (139, 141, 143) form a first, second and third communication channel in order to transmit data to the carriage (103) via the first communication channel, in order to receive data from the carriage (103) via the second communication channel and in order to transmit the clock signal based on the reference time to the carriage (103) via the third communication channel.

3. Linear transport system (101) according to Claim 1 or 2, wherein the carriage (103) has a carriage voltage supply (215) which is coupled to the one or more power receiver coils (137) in order to be able to supply the transmitted power to the carriage voltage supply (215), wherein the carriage (103) has a carriage control device (217) which is coupled to the carriage voltage supply (215) for supply with electrical power by the carriage voltage supply (215).

4. Linear transport system (101) according to Claim 3, wherein the carriage voltage supply (215) is coupled to at least one of the one or more second data coils (139, 141, 143), wherein the carriage control device (217) is designed to control the carriage voltage supply (215) in order to in each case supply an electrical voltage to at least one of the at least one second data coils (139, 141, 143) coupled to the carriage voltage supply (215), so that data can be contactlessly transmitted from the carriage (103) by means of inductive coupling of a second data coil (139, 141, 143), to which an electrical voltage is applied, to a first data coil (127, 129, 131, 133, 135) .

5. Linear transport system (101) according to Claim 3 or 4, wherein the carriage (103) comprises an electrical device (157) which is coupled to the carriage voltage supply (215) in order to be able to supply electrical power to the electrical device (157), wherein the carriage control device (217) is coupled to the one or more second data coils (139, 141, 143) in order to be able to receive the transmitted data, and wherein the carriage control device (217) is designed to control the electrical device (157) based on the received data.

6. Linear transport system (101) according to one of the preceding claims, wherein at least one of the one or more stationary coil modules (121) extends along the at least one motor module (111), wherein the at least one stationary coil module (121) has precisely one power transmitter coil (125) which extends from a first end to a second end, situated opposite the first end, of the at least one coil module (121) along the at least one motor module (111).

7. Linear transport system (101) according to one of the preceding claims, wherein at least one of the one or more stationary coil modules (121) extends along the at least one motor module (111), wherein the at least one stationary coil module (121) has a plurality of power transmitter coils (125) which are arranged offset in relation to one another along the at least one motor module (111).

8. Linear transport system (101) according to Claim 7, wherein the plurality of power transmitter coils (125) are arranged offset in relation to one another in a partially overlapping manner.

9. Linear transport system (101) according to one of the preceding claims, wherein a plurality of stationary coil modules (121) extending along the at least one motor module (111) are provided, at least two of which are arranged directly adjacent to one another, wherein the two directly adjacent stationary coil modules (121) each have part of a power transmitter coil (125) in such a way that the two parts form a power transmitter coil (125).

10. Linear transport system (101) according to one of the preceding claims, wherein at least one of the one or more stationary coil modules (121) has a circuit board which comprises the one or more power transmitter coils (125) and the one or more first data coils (127, 129, 131, 133, 135), wherein the circuit board forms an outer side of the at least one motor module (111).

11. Method for operating a linear transport system comprising one or more stationary coil modules (121) which are arranged in a stationary manner along a motor module (111) and one or more carriage coil modules (123) arranged on a carriage (103),
wherein the one or more stationary coil modules (121) each have one or more power transmitter coils (125) and one or more first data coils (127, 129, 131, 133, 135), wherein the one or more carriage coil modules (123) have one or more power receiver coils (137) which can be inductively coupled to the one or more power transmitter coils (125) and one or more second data coils (139, 141, 143) which can be inductively coupled to the one or more first data coils (127, 129, 131, 133, 135),
comprising the following steps:
controlling (221) a voltage supply (145) for the one or more stationary coil modules (121) by means of a control device (151), so that at least one of the one or more power transmitter coils (125) and/or at least one of the one or more first data coils (127, 129, 131, 133, 135) each have an electrical voltage applied (223) to them, so that power is contactlessly transmitted (225) to the carriage (103) by means of inductive coupling of a power transmitter coil (125), to which an electrical voltage is applied, to a power receiver coil (137) and/or data can be contactlessly transmitted (227) to the carriage (103) and/or received (1401) from the carriage (103) by means of inductive coupling of a first data coil (127, 129, 131, 133, 135), to which an electrical voltage is applied, to a second data coil (139, 141, 143),
**characterized in that**
the control device (151) controls the voltage supply (145) based on a reference time in order to contactlessly transmit a clock signal based on the reference time to the carriage (103) as data.

12. Method according to Claim 11, wherein the one or more first data coils (127, 129, 131, 133, 135) and the one or more second data coils (139, 141, 143) form a first, second and third communication channel, wherein data are transmitted to the carriage (103) via the first communication channel, wherein data are received from the carriage (103) via the second communication channel and wherein the clock signal based on the reference time is transmitted to the carriage (103) via the third communication channel.

## Revendications

1. Système de transport linéaire (101), comprenant :
un chariot mobile (103),
un rail de guidage (105) pour guider le chariot (103),
un moteur linéaire (107) pour entraîner le chariot (103) le long du rail de guidage (105), le moteur linéaire (107) comprenant un stator (109) et un rotor (115), le stator (109) présentant au moins un module de moteur (111) disposé de manière stationnaire le long du rail de guidage (105) et qui comprend respectivement une ou plusieurs bobines d'entraînement (113), le rotor (115) étant disposé sur le chariot (103) et comprenant un ou plusieurs aimants (117), et
un système (119) pour la transmission d'énergie et de données sans contact pour un système de transport linéaire (101), le système (119) de transmission d'énergie et de données sans contact comprenant ce qui suit :
un ou plusieurs modules de bobines stationnaires (121) qui peuvent être disposés de manière stationnaire le long de l'au moins un module de moteur (111),
un ou plusieurs modules de bobines de chariot (123) pouvant être disposés sur le chariot (103),
ledit un ou les plusieurs modules de bobines stationnaires (121) présentant respectivement une ou plusieurs bobines d'émission d'énergie (125) et une ou plusieurs premières bobines de données (127, 129, 131, 133, 135),
ledit un ou les plusieurs modules de bobines de chariot (123) présentant une ou plusieurs bobines de réception d'énergie (137) pouvant être couplées par induction avec ladite une ou les plusieurs bobines d'émission d'énergie (125) et une ou plusieurs deuxièmes bobines de données (139, 141, 143) pouvant être couplées par induction avec ladite une ou les plusieurs premières bobines de données (127, 129, 131, 133, 135),
un dispositif de commande (151) qui est réalisé pour commander un bloc d'alimentation en tension (145) pour ledit un ou les plusieurs modules de bobines stationnaires (121) afin d'appliquer une tension électrique respectivement au moins à l'une de ladite une ou des plusieurs bobines d'émission d'énergie (125) et/ou au moins à l'une de ladite une ou des plusieurs premières bobines de données (127, 129, 131, 133, 135),
de sorte que par un couplage inductif, de l'énergie peut être transmise sans contact au chariot (103) à partir d'une bobine d'émission d'énergie (125), à laquelle une tension électrique est appliquée, avec une bobine de réception d'énergie (137), et/ou par un couplage inductif, des données peuvent être émises sans contact au chariot (103) à partir d'une première bobine de données (127, 129, 131, 133, 135), à laquelle une tension électrique est appliquée, avec une deuxième bobine de données (139, 141, 143), et/ou peuvent être reçues par le chariot (103),
**caractérisé en ce qu'**une interface de communication est prévue qui est réalisée pour recevoir un temps de référence par un réseau de communication, le dispositif de commande (151) étant réalisé pour commander le bloc d'alimentation en tension (145) sur la base du temps de référence afin de transmettre sans contact au chariot (103) un signal d'horloge basé sur le temps de référence en tant que données.

2. Système de transport linéaire (101), dans lequel ladite une ou les plusieurs premières bobines de données (127, 129, 131, 133, 135) et ladite une ou les plusieurs deuxièmes bobines de données (139, 141, 143) constituent un premier, un deuxième et un troisième canal de communication pour émettre des données au chariot (103) par le premier canal de communication, pour recevoir des données du chariot (103) par le deuxième canal de communication, et pour transmettre au chariot (103) le signal d'horloge basé sur le temps de référence par le troisième canal de communication.

3. Système de transport linéaire (101) selon la revendication 1 ou 2, dans lequel le chariot (103) présente un bloc d'alimentation en tension de chariot (215) qui est couplé avec ladite une ou les plusieurs bobines de réception d'énergie (137) afin de pouvoir alimenter le bloc d'alimentation en tension de chariot (215) par l'énergie transmise, le chariot (103) présentant un dispositif de commande de chariot (217) qui est couplé avec le bloc d'alimentation en tension de chariot (215) pour une alimentation en énergie électrique par le bloc d'alimentation en tension de chariot (215).

4. Système de transport linéaire (101) selon la revendication 3, dans lequel le bloc d'alimentation en tension de chariot (215) est couplé avec au moins l'une de ladite une ou des plusieurs deuxièmes bobines de données (139, 141, 143), le dispositif de commande de chariot (217) étant réalisé pour commander le bloc d'alimentation en tension de chariot (215) afin d'appliquer une tension électrique respectivement à au moins l'une de ladite au moins une deuxième bobine de données (139, 141, 143) couplée avec le bloc d'alimentation en tension de chariot (215) de sorte que par un couplage inductif d'une deuxième bobine de données (139, 141, 143), à laquelle une tension électrique est appliquée, avec une première bobine de données (127, 129, 131, 133, 135), des données peuvent être transmises sans contact à partir du chariot (103).

5. Système de transport linéaire (101) selon la revendication 3 ou 4, dans lequel le chariot (103) comprend un appareil électrique (157) qui est couplé avec le bloc d'alimentation en tension de chariot (215) afin de pouvoir alimenter en énergie électrique l'appareil électrique (157), le dispositif de commande de chariot (217) étant couplé avec ladite une ou les plusieurs deuxièmes bobines de données (139, 141, 143) afin de pouvoir recevoir les données transmises, et le dispositif de commande de chariot (217) étant réalisé pour commander l'appareil électrique (157) sur la base des données reçues.

6. Système de transport linéaire (101) selon l'une quelconque des revendications précédentes, dans lequel au moins l'un dudit un ou des plusieurs modules de bobines stationnaires (121) s'étend le long de l'au moins un module de moteur (111), ledit au moins un module de bobines stationnaire (121) présentant exactement une bobine d'émission d'énergie (125) qui s'étend d'une première extrémité à une deuxième extrémité opposée à la première extrémité de l'au moins un module de bobines (121) le long de l'au moins un module de moteur (111).

7. Système de transport linéaire (101) selon l'une quelconque des revendications précédentes, dans lequel au moins l'un dudit un ou des plusieurs modules de bobines stationnaires (121) s'étend le long de l'au moins un module de moteur (111), ledit au moins un module de bobines stationnaire (121) présentant plusieurs bobines d'émission d'énergie (125) qui sont disposées de manière décalée les unes par rapport aux autres le long de l'au moins un module de moteur (111).

8. Système de transport linéaire (101) selon la revendication 7, dans lequel les plusieurs bobines d'émission d'énergie (125) sont disposées les unes par rapport aux autres de manière décalée avec un recouvrement partiel.

9. Système de transport linéaire (101) selon l'une quelconque des revendications précédentes, dans lequel plusieurs modules de bobines stationnaires (121) s'étendant le long de l'au moins un module de moteur (111) sont prévus dont au moins deux sont disposés l'un par rapport à l'autre de manière directement adjacente, les deux modules de bobines stationnaires (121) directement adjacents présentant respectivement une partie d'une bobine d'émission d'énergie (125) de telle sorte que les deux parties constituent une bobine d'émission d'énergie (125).

10. Système de transport linéaire (101) selon l'une quelconque des revendications précédentes, dans lequel au moins l'un dudit un ou des plusieurs modules de bobines stationnaires (121) présente une carte de circuit imprimé qui comprend ladite une ou les plusieurs bobines d'émission d'énergie (125) et ladite une ou les plusieurs premières bobines de données (127, 129, 131, 133, 135), la carte de circuit imprimé constituant une face extérieure de l'au moins un module de moteur (111).

11. Procédé permettant de faire fonctionner un système de transport linéaire comprenant un ou plusieurs modules de bobines stationnaires (121) qui sont disposés de manière stationnaire le long d'un module de moteur (111), un ou plusieurs modules de bobines de chariot (123) disposés sur un chariot (103),
ledit un ou les plusieurs modules de bobines stationnaires (121) présentant respectivement une ou plusieurs bobines d'émission d'énergie (125) et une ou plusieurs premières bobines de données (127, 129, 131, 133, 135),
ledit un ou les plusieurs modules de bobines de chariot (123) présentant une ou plusieurs bobines de réception d'énergie (137) pouvant être couplées par induction avec ladite une ou les plusieurs bobines d'émission d'énergie (125) et une ou plusieurs deuxièmes bobines de données (139, 141, 143) pouvant être couplées par induction avec ladite une ou les plusieurs premières bobines de données (127, 129, 131, 133, 135),
comprenant les étapes suivantes consistant à :
commander (221) un bloc d'alimentation en tension (145) pour ledit un ou les plusieurs modules de bobines stationnaires (121) au moyen d'un dispositif de commande (151) de sorte qu'une tension électrique est appliquée (223) respectivement à au moins l'une de ladite une ou des plusieurs bobines d'émission d'énergie (125) et/ou à au moins l'une de ladite une ou des plusieurs premières bobines de données (127, 129, 131, 133, 135) de sorte que par un couplage inductif, de l'énergie est transmise sans contact (225) au chariot (103) à partir d'une bobine d'émission d'énergie (125), à laquelle une tension électrique est appliquée, avec une bobine de réception d'énergie (137), et/ou par un couplage inductif, des données sont émises sans contact (227) au chariot (103) et/ou sont reçues (1401) du chariot (103) à partir d'une première bobine de données (127, 129, 131, 133, 135), à laquelle une tension électrique est appliquée, avec une deuxième bobine de données (139, 141, 143),
**caractérisé en ce que** le dispositif de commande (151) commande le bloc d'alimentation en tension (145) sur la base d'un temps de référence afin de transmettre sans contact au chariot (103) un signal d'horloge basé sur le temps de référence en tant que données.

12. Procédé selon la revendication 11, dans lequel ladite une ou les plusieurs premières bobines de données (127, 129, 131, 133, 135) et ladite une ou les plusieurs deuxièmes bobines de données (139, 141, 143) constituent un premier, un deuxième et un troisième canal de communication, des données étant émises au chariot (103) par le premier canal de communication,
des données étant reçues du chariot (103) par le deuxième canal de communication, et le signal d'horloge basé sur le temps de référence étant transmis au chariot (103) par le troisième canal de communication.
